# EUROPEAN PATENT SPECIFICATION

(11) **EP 2 131 935 B1**
(45) Date of publication and mention of the grant of the patent: **09.02.2011**
(21) Application number: 08709557.6
(22) Date of filing: 29.02.2008
(51) Int. Cl.: A63F 13/12, A63F 13/00

(54) **APPARATUS AND METHOD OF DATA TRANSFER**
DATENTRANSFERVORRICHTUNG UND -VERFAHREN
APPAREIL ET PROCÉDÉ DE TRANSFERT DE DONNÉES

(30) Priority: 01.03.2007 GB 0703974; 10.08.2007 GB 0715650
(43) Date of publication of application: 16.12.2009
(73) Proprietor: Sony Computer Entertainment Europe Limited, London W1F 7LP (GB)
(72) Inventor: GILLO, Tomas, Owen, Brighton East Sussex BN1 5AN (GB); WAUGAMAN, Scott, Christopher, London W1F 7LP (GB); GOODWIN, Mitchell, London W1F 7LP (GB); RIBBONS, Keith Thomas, London W1F 7LP (GB)
(74) Representative: Turner, James Arthur
(86) International application number: PCT/GB2008/000683
(87) International publication number: WO 2008/104786

(56) References cited:
- EP-A- 1 255 203
- US-A1- 2006 025 216
- LINDEN RESEARCH, INC: "Second Life" [Online] 2003, LINDEN RESEARCH, INC , XP002478210 Retrieved from the Internet: URL:http://en.wikipedia.org/wiki/Second_Li fe> [retrieved on 2008-04-24] cited in the application the whole document
- HALOWIKI.NET: "Halo 2 - Proximity Voice" [Online] 10 July 2005 (2005-07-10), WWW.HALOWIKI.NET , HTTP://H2.HALOWIKI.NET/P/PROXIMITY_VOICE , XP002491427 Retrieved from the Internet: URL:HTTP://H2.HALOWIKI.NET/P/PROXIMITY_VOI CE> [retrieved on 2008-08-07] the whole document -& BUNGIE GAMES: "Halo 2 - release date information" [Online] 9 November 2004 (2004-11-09), BUNGIE GAMES , MICROSOFT GAMES , XP002491428 Retrieved from the Internet: URL:http://gamefaqs.com/console/xbox/data/ 562116.html> [retrieved on 2008-08-07] the whole document

## Description

The present invention relates to an apparatus and method of data transfer.

Data communication protocols such as peer-to-peer communications protocols and multicast protocols are frequently used to communicate between computing devices whenever data needs to be shared between the computing devices or transmitted from one computing device to a plurality of other computing devices over a network. Such data communication protocols are described in *"*Computer Networks: A Systems Approach ", 4th edition, L. Peterson and B. Davie, Morgan Kaufmann Publishers, San Francisco 2007. One application of these data communication protocols is in massively multiplayer online games (MMOGs) such as *Second Life* and *The Sina Online* that are becoming increasingly popular amongst the computer gaming community. In such games, players are able to communicate with each other over a network such as the internet using voice chat facilities (for example by using the Voice over Internet Protocol (VoIP)), as well as participate in real-time gaming with each other.

Typically, when communicating via VoIP, a user talks into a microphone connected to an entertainment device such as the Sony ® PlayStation 3 ® (PS3®) and the captured speech is transmitted to the entertainment devices of other users within the gaming environment over the network. However, where there are multiple players within the same game environment, it can be difficult to distinguish which user is speaking, especially if there are many users talking at once or there are many in-game sound effects. Additionally, the transmission of large amounts of speech data between entertainment devices can place an additional burden on the network being used to transmit the data between the entertainment devices. This can lead to a reduction in audio quality or a reduction in bandwidth available for other data such as that related to game events and game character interaction and position within the game environment, thus detracting from the overall game experience.

Background art is US-2006/0025216 which relates to video game voice chat with amplitude-based virtual ranging.

The present invention seeks to alleviate or mitigate the above problems.

In a first aspect, there is provided a method of transferring real-time multimedia data in accordance with claim 1 appended hereto.

Therefore, real-time multimedia data can be sent from the first entertainment device to other entertainment devices on the client list without overburdening the transmission bandwidth of the first entertainment device. The entertainment devices in the first subset that receive the real-time multimedia data together with the respective client indices from the second subset can then, for example, forward the data to those entertainment devices associated with the respective received client indices in the second subset. Therefore, for example, the real-time multimedia data can be transmitted from the first entertainment device to those entertainment devices on the target list without an undue processing load or bandwidth requirement being placed on any one entertainment device that is to forward the data to other entertainment devices.

In a second aspect, there is provided a method of transferring real-time multimedia data in accordance with claim 8 appended hereto.

Accordingly, instead of forwarding the data to all the entertainment devices on the target list, the second entertainment device may forward the data to a subset of the entertainment devices together with client indices that indicate to which other entertainment devices the data should be forwarded. Consequently, the bandwidth required to transmit the real-time multimedia data from each entertainment device is reduced as the data is forwarded between entertainment devices rather than being transmitted from one entertainment device to all those entertainment devices on the target list.

In a third aspect, there is provided an entertainment device according to claim 11 appended hereto..

Therefore, real-time multimedia data can be sent from the first entertainment device to other entertainment devices on the client list without overburdening the transmission bandwidth of the first entertainment device. The entertainment devices in the first subset that receive the real-time multimedia data together with the respective client indices from the second subset can then, for example, forward the data to those entertainment devices associated with the respective received client indices in the second subset. Therefore, for example, the real-time multimedia data can be transmitted from the first entertainment device to those entertainment devices on the target list without an undue processing load or bandwidth requirement being placed on any one entertainment device that is to forward the data to other entertainment devices.

In a fourth aspect, there is provided an entertainment device according to claim 12 appended hereto.

Further respective aspects and features of the invention are defined in the appended claims.

Embodiments of the present invention will now be described by way of example with reference to the accompanying drawings, in which:
Figure 1 is a schematic diagram of an entertainment device;
Figure 2 is a schematic diagram of a cell processor;
Figure 3 is a schematic diagram of a video graphics processor;
Figure 4 is a schematic diagram of an interconnected set of game zones in accordance with an embodiment of the present invention;
Figure 5 is a schematic diagram of a Home environment online client/server arrangement in accordance with an embodiment of the present invention;
Figure 6a is a schematic diagram of a lobby zone in accordance with an embodiment of the present invention;
Figure 6b is a schematic diagram of a lobby zone in accordance with an embodiment of the present invention;
Figure 6c is a schematic diagram of a cinema zone in accordance with an embodiment of the present invention;
Figure 6d is a schematic diagram of a developer/publisher zone in accordance with an embodiment of the present invention;
Figure 7 is a flow diagram of a method of on-line transaction in accordance with an embodiment of the present invention;
Figure 8a is schematic diagram of an apartment zone in accordance with an embodiment of the present invention;
Figure 8b is schematic diagram of a trophy room zone in accordance with an embodiment of the present invention;
Figure 9 is a schematic diagram of a communication menu in accordance with an embodiment of the present invention;
Figure 10 is a schematic diagram of an interactive virtual user device in accordance with an embodiment of the present invention;
Figure 11 is a schematic diagram of part of an instance of an on-line virtual environment in accordance with an embodiment of the present invention;
Figure 12 is a schematic diagram of a method of data transfer in accordance with an embodiment of the present invention;
Figure 13 is a schematic diagram of an interaction between avatars within an on-line virtual environment in accordance with an embodiment of the present invention;
Figure 14 is a schematic diagram of an interaction between avatars within different zones within an on-line virtual environment in accordance with an embodiment of the present invention;
Figure 15 shows a flow diagram of a method of data transfer in accordance with an embodiment of the present invention; and
Figure 16 shows a flow diagram of a method of data transfer in accordance with an embodiment of the present invention.

An apparatus and method of data transfer is disclosed. In the following description, a number of specific details are presented in order to provide a thorough understanding of embodiments of the present invention. It will be apparent however to a person skilled in the art that these specific details need not be employed to practise the present invention. Conversely, specific details known to the person skilled in the art are omitted for the purposes of clarity in presenting the embodiments.

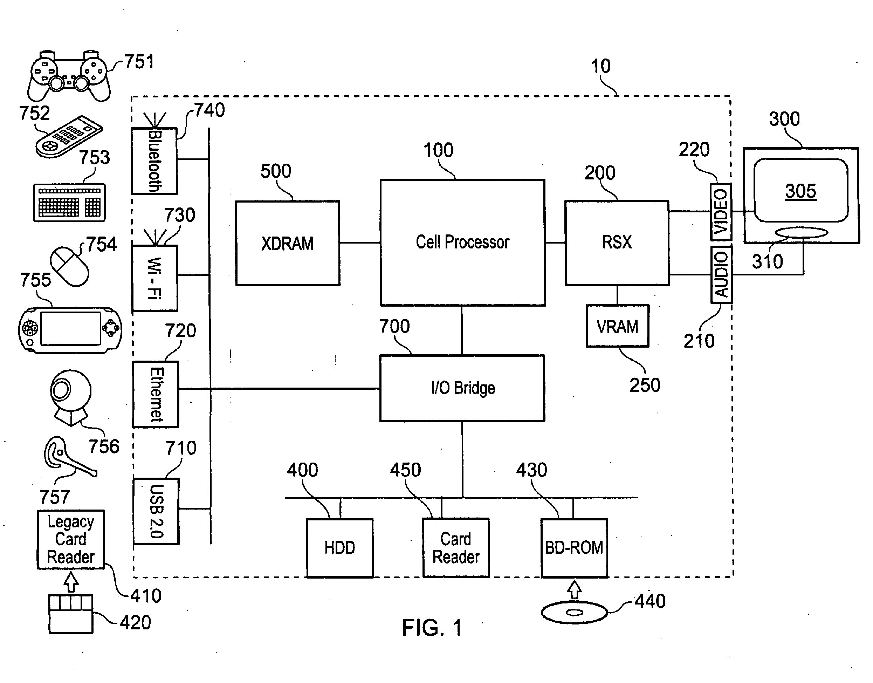

Referring now to Figure 1, in an embodiment of the present invention, the entertainment device is a Sony^{®} Playstation 3^{®} (PS3^{®}). Figure 1 schematically illustrates the overall system architecture of the Sony® Playstation 3® entertainment device; a system unit 10 is provided, with various peripheral devices connectable to the system unit.

The system unit 10 comprises: a Cell processor 100; a Rambus® dynamic random access memory (XDRAM) unit 500; a Reality Synthesiser graphics unit 200 with a dedicated video random access memory (VRAM) unit 250; and an I/O bridge 700.

The system unit 10 also comprises a Blu Ray® Disk BD-ROM® optical disk reader 430 for reading from a disk 440 and a removable slot-in hard disk drive (HDD) 400, accessible through the I/O bridge 700. Optionally the system unit also comprises a memory card reader 450 for reading compact flash memory cards, Memory Stick® memory cards and the like, which is similarly accessible through the I/O bridge 700.

The I/O bridge 700 also connects to four Universal Serial Bus (USB) 2.0 ports 710; a gigabit Ethernet port 720; an IEEE 802.11b/g wireless network (Wi-Fi) port 730; and a Bluetooth® wireless link port 740 capable of supporting of up to seven Bluetooth connections.

In operation the I/O bridge 700 handles all wireless, USB and Ethernet data, including data from one or more game controllers 751. For example when a user is playing a game, the I/O bridge 700 receives data from the game controller 751 via a Bluetooth link and directs it to the Cell processor 100, which updates the current state of the game accordingly.

The wireless, USB and Ethernet ports also provide connectivity for other peripheral devices in addition to game controllers 751, such as: a remote control 752; a keyboard 753; a mouse 754; a portable entertainment device 755 such as a Sony Playstation Portable® entertainment device; a video camera such as an EyeToy® video camera 756; and a microphone headset 757. Such peripheral devices may therefore in principle be connected to the system unit 10 wirelessly; for example the portable entertainment device 755 may communicate via a Wi-Fi ad-hoc connection, whilst the microphone headset 757 may communicate via a Bluetooth link.

The provision of these interfaces means that the Playstation 3 device is also potentially compatible with other peripheral devices such as digital video recorders (DVRs), set-top boxes, digital cameras, portable media players, Voice over IP telephones, mobile telephones, printers and scanners.

In addition, a legacy memory card reader 410 may be connected to the system unit via a USB port 710, enabling the reading of memory cards 420 of the kind used by the Playstation® or Playstation 2® devices.

In the present embodiment, the game controller 751 is operable to communicate wirelessly with the system unit 10 via the Bluetooth link. However, the game controller 751 can instead be connected to a USB port, thereby also providing power by which to charge the battery of the game controller 751. In addition to one or more analogue joysticks and conventional control buttons, the game controller is sensitive to motion in 6 degrees of freedom, corresponding to translation and rotation in each axis. Consequently gestures and movements by the user of the game controller may be translated as inputs to a game in addition to or instead of conventional button or joystick commands. Optionally, other wirelessly enabled peripheral devices such as the Playstation Portable device may be used as a controller. In the case of the Playstation Portable device, additional game or control information (for example, control instructions or number of lives) may be provided on the screen of the device. Other alternative or supplementary control devices may also be used, such as a dance mat (not shown), a light gun (not shown), a steering wheel and pedals (not shown) or bespoke controllers, such as a single or several large buttons for a rapid-response quiz game (also not shown).

The remote control 752 is also operable to communicate wirelessly with the system unit 10 via a Bluetooth link. The remote control 752 comprises controls suitable for the operation of the Blu Ray Disk BD-ROM reader 430 and for the navigation of disk content

The Blu Ray Disk BD-ROM reader 430 is operable to read CD-ROMs compatible with the Playstation and PlayStation 2 devices, in addition to conventional pre-recorded and recordable CDs, and so-called Super Audio CDs. The reader 430 is also operable to read DVD-ROMs compatible with the Playstation 2 and PlayStation 3 devices, in addition to conventional pre-recorded and recordable DVDs. The reader 430 is further operable to read BD-ROMs compatible with the Playstation 3 device, as well as conventional pre-recorded and recordable Blu-Ray Disks.

The system unit 10 is operable to supply audio and video, either generated or decoded by the Playstation 3 device via the Reality Synthesiser graphics unit 200, through audio and video connectors to a display and sound output device 300 such as a monitor or television set having a display 305 and one or more loudspeakers 310. The audio connectors 210 may include conventional analogue and digital outputs whilst the video connectors 220 may variously include component video, S-video, composite video and one or more High Definition Multimedia Interface (HDMI) outputs. Consequently, video output may be in formats such as PAL or NTSC, or in 720p, 1080i or 1080p high definition.

Audio processing (generation, decoding and so on) is performed by the Cell processor 100. The Playstation 3 device's operating system supports Dolby® 5.1 surround sound, Dolby® Theatre Surround (DTS), and the decoding of 7.1 surround sound from Blu-Ray® disks.

In the present embodiment, the video camera 756 comprises a single charge coupled device (CCD), an LED indicator, and hardware-based real-time data compression and encoding apparatus so that compressed video data may be transmitted in an appropriate format such as an intra-image based MPEG (motion picture expert group) standard for decoding by the system unit 10. The camera LED indicator is arranged to illuminate in response to appropriate control data from the system unit 10, for example to signify adverse lighting conditions. Embodiments of the video camera 756 may variously connect to the system unit 10 via a USB, Bluetooth or Wi-Fi communication port. Embodiments of the video camera may include one or more associated microphones and also be capable of transmitting audio data. In embodiments of the video camera, the CCD may have a resolution suitable for high-definition video capture. In use, images captured by the video camera may for example be incorporated within a game or interpreted as game control inputs.

In general, in order for successful data communication to occur with a peripheral device such as a video camera or remote control via one of the communication ports of the system unit 10, an appropriate piece of software such as a device driver should be provided. Device driver technology is well-known and will not be described in detail here, except to say that the skilled man will be aware that a device driver or similar software interface may be required in the present embodiment described.

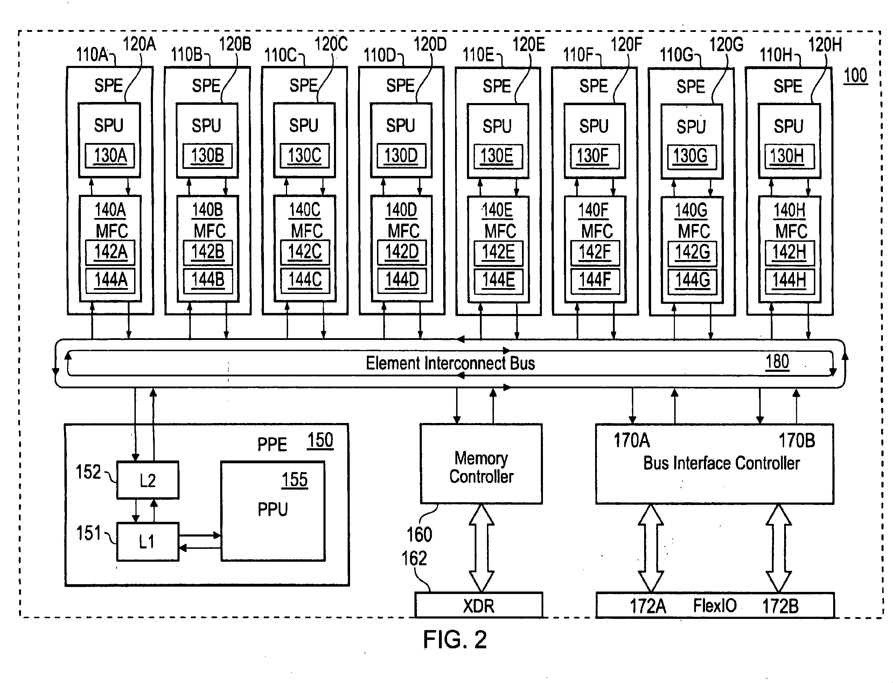

Referring now to Figure 2, the Cell processor 100 has an architecture comprising four basic components: external input and output structures comprising a memory controller 160 and a dual bus interface controller 170A,B; a main processor referred to as the Power Processing Element 150; eight co-processors referred to as Synergistic Processing Elements (SPEs) 110AH; and a circular data bus connecting the above components referred to as the Element Interconnect Bus 180. The total floating point performance of the Cell processor is 218 GFLOPS, compared with the 6.2 GFLOPs of the Playstation 2 device's Emotion Engine.

The Power Processing Element (PPE) 150 is based upon a two-way simultaneous multithreading Power 970 compliant PowerPC core (PPU) 155 running with an internal clock of 3.2 GHz. It comprises a 512 kB level 2 (L2) cache and a 32 kB level 1 (L1) cache. The PPE 150 is capable of eight single position operations per clock cycle, translating to 25.6 GFLOPs at 3.2 GHz, The primary role of the PPE 150 is to act as a controller for the Synergistic Processing Elements 110A-H, which handle most of the computational workload. In operation the PPE 150 maintains a job queue, scheduling jobs for the Synergistic Processing Elements 110A-H and monitoring their progress. Consequently each Synergistic Processing Element 110A-H runs a kernel whose role is to fetch a job, execute it and synchronise with the PPE 150.

Each Synergistic Processing Element (SPE) 110A-H comprises a respective Synergistic Processing Unit (SPU) 120A-H, and a respective Memory Flow Controller (MFC) 140A-H comprising in turn a respective Dynamic Memory Access Controller (DMAC) 142A-H, a respective Memory Management Unit (MMU) 144A-H and a bus interface (not shown). Each SPU 120A-H is a RISC processor clocked at 3.2 GHz and comprising 256 kB local RAM 130AH, expandable in principle to 4 GB. Each SPE gives a theoretical 25.6 GFLOPS of single precision performance. An SPU can operate on 4 single precision floating point members, 4 32-bit numbers, 8 16-bit integers, or 16 8-bit integers in a single clock cycle. In the same clock cycle it can also perform a memory operation. The SPU 120A-H does not directly access the system memory XDRAM 500; the 64-bit addresses formed by the SPU 120A-H are passed to the MFC 140A-H which instructs its DMA controller 142A-H to access memory via the Element Interconnect Bus 180 and the memory controller 160.

The Element Interconnect Bus (EIB) 180 is a logically circular communication bus internal to the Cell processor 100 which connects the above processor elements, namely the PPE 150, the memory controller 160, the dual bus interface 170A,B and the 8 SPEs 110A-H, totalling 12 participants. Participants can simultaneously read and write to the bus at a rate of 8 bytes per clock cycle. As noted previously, each SPE 110A-H comprises a DMAC 142A-H for scheduling longer read or write sequences. The EIB comprises four channels, two each in clockwise and anti-clockwise directions. Consequently for twelve participants, the longest step-wise data-flow between any two participants is six steps in the appropriate direction. The theoretical peak instantaneous EIB bandwidth for 12 slots is therefore 96B per clock, in the event of full utilisation through arbitration between participants. This equates to a theoretical peak bandwidth of 307.2 GB/s (gigabytes per second) at a clock rate of 3.2GHz.

The memory controller 160 comprises an XDRAM interface 162, developed by Rambus Incorporated. The memory controller interfaces with the Rambus DRAM 500 with a theoretical peak bandwidth of 25.6 GB/s.

The dual bus interface 170A,B comprises a Rambus FlexIO® system interface 172A,B. The interface is organised into 12 channels each being 8 bits wide, with five paths being inbound and seven outbound. This provides a theoretical peak bandwidth of 62.4 GB/s (36.4 GB/s outbound, 26 GB/s inbound) between the Cell processor and the I/O Bridge 700 via controller 170A and the Reality Simulator graphics unit 200 via controller 170B.

Data sent by the Cell processor 100 to the Reality Simulator graphics unit 200 will typically comprise display lists, being a sequence of commands to draw vertices, apply textures to polygons, specify lighting conditions, and so on.

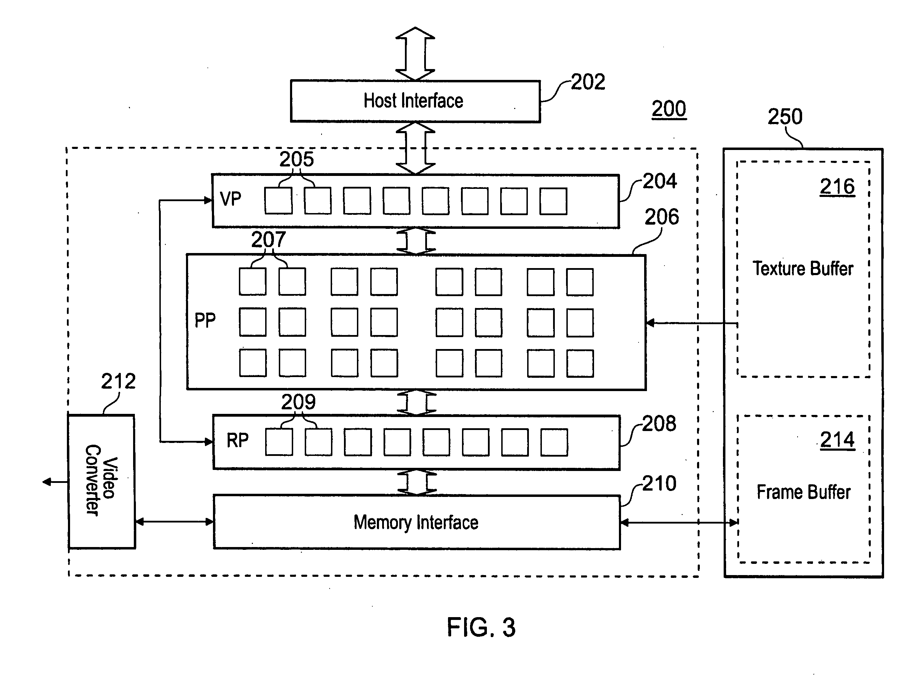

Referring now to Figure 3, the Reality Simulator graphics (RSX) unit 200 is a video accelerator based upon the NVidia® G70/71 architecture that processes and renders lists of commands produced by the Cell processor 100. The RSX unit 200 comprises a host interface 202 operable to communicate with the bus interface controller 170B of the Cell processor 100; a vertex pipeline 204 (VP) comprising eight vertex shaders 205; a pixel pipeline 206 (PP) comprising 24 pixel shaders 207; a render pipeline 208 (RP) comprising eight render output units (ROPs) 209; a memory interface 210; and a video converter 212 for generating a video output. The RSX 200 is complemented by 256 MB double data rate (DDR) video RAM (VRAM) 250, clocked at 600MHz and operable to interface with the RSX 200 at a theoretical peak bandwidth of 25.6 GB/s. In operation, the VRAM 250 maintains a frame buffer 214 and a texture buffer 216. The texture buffer 216 provides textures to the pixel shaders 207, whilst the frame buffer 214 stores results of the processing pipelines. The RSX can also access the main memory 500 via the EIB 180, for example to load textures into the VRAM 250.

The vertex pipeline 204 primarily processes deformations and transformations of vertices defining polygons within the image to be rendered.

The pixel pipeline 206 primarily processes the application of colour, textures and lighting to these polygons, including any pixel transparency, generating red, green, blue and alpha (transparency) values for each processed pixel. Texture mapping may simply apply a graphic image to a surface, or may include bump-mapping (in which the notional direction of a surface is perturbed in accordance with texture values to create highlights and shade in the lighting model) or displacement mapping (in which the applied texture additionally perturbs vertex positions to generate a deformed surface consistent with the texture).

The render pipeline 208 performs depth comparisons between pixels to determine which should be rendered in the final image. Optionally, if the intervening pixel process will not affect depth values (for example in the absence of transparency or displacement mapping) then the render pipeline and vertex pipeline 204 can communicate depth information between them, thereby enabling the removal of occluded elements prior to pixel processing, and so improving overall rendering efficiency. In addition, the render pipeline 208 also applies subsequent effects such as full-screen anti-aliasing over the resulting image.

Both the vertex shaders 205 and pixel shaders 207 are based on the shaders model 3.0 standard. Up to 136 shader operations can be performed per clock cycle, with the combined pipeline therefore capable of 74.8 billion shader operations per second, outputting up to 840 million vertices and 10 billion pixels per second. The total floating point performance of the RSX 200 is 1.8 TFLOPS.

Typically, the RSX 200 operates in close collaboration with the Cell processor 100; for example, when displaying an explosion, or weather effects such as rain or snow, a large number of particles must be tracked, updated and rendered within the scene. In this case, the PPU 155 of the Cell processor may schedule one or more SPEs 110A-H to compute the trajectories of respective batches of particles. Meanwhile, the RSX 200 accesses any texture data (e.g. snowflakes) not currently held in the video RAM 250 from the main system memory 500 via the element interconnect bus 180, the memory controller 160 and a bus interface controller 170B. The or each SPE 110A-H outputs its computed particle properties (typically coordinates and normals, indicating position and attitude) directly to the video RAM 250; the DMA controller 142A-H of the or each SPE 110A-H addresses the video RAM 250 via the bus interface controller 170B. Thus in effect the assigned SPEs become part of the video processing pipeline for the duration of the task.

In general, the PPU 155 can assign tasks in this fashion to six of the eight SPEs available; one SPE is reserved for the operating system, whilst one SPE is effectively disabled. The disabling of one SPE provides a greater level of tolerance during fabrication of the Cell processor, as it allows for one SPE to fail the fabrication process. Alternatively if all eight SPEs are functional, then the eighth SPE provides scope for redundancy in the event of subsequent failure by one of the other SPEs during the life of the Cell processor.

The PPU 155 can assign tasks to SPEs in several ways. For example, SPEs may be chained together to handle each step in a complex operation, such as accessing a DVD, video and audio decoding, and error masking, with each step being assigned to a separate SPE. Alternatively or in addition, two or more SPEs may be assigned to operate on input data in parallel, as in the particle animation example above.

Software instructions implemented by the Cell processor 100 and/or the RSX 200 may be supplied at manufacture and stored on the HDD 400, and/or may be supplied on a data carrier or storage medium such as an optical disk or solid state memory, or via a transmission medium such as a wired or wireless network or internet connection, or via combinations of these.

The software supplied at manufacture comprises system firmware and the Playstation 3 device's operating system (OS). In operation, the OS provides a user interface enabling a user to select from a variety of functions, including playing a game, listening to music, viewing photographs, or viewing a video. The interface takes the form of a so-called cross media-bar (XMB), with categories of function arranged horizontally. The user navigates by moving through the function icons (representing the functions) horizontally using the game controller 751, remote control 752 or other suitable control device so as to highlight a desired function icon, at which point options pertaining to that function appear as a vertically scrollable list of option icons centred on that function icon, which may be navigated in analogous fashion. However, if a game, audio or movie disk 440 is inserted into the BD-ROM optical disk reader 430, the Playstation 3 device may select appropriate options automatically (for example, by commencing the game), or may provide relevant options (for example, to select between playing an audio disk or compressing its content to the HDD 400).

In addition, the OS provides an on-line capability, including a web browser, an interface with an on-line store from which additional game content, demonstration games (demos) and other media may be downloaded, and a friends management capability, providing on-line communication with other Playstation 3 device users nominated by the user of the current device; for example, by text, audio or video depending on the peripheral devices available. The on-line capability also provides for on-line communication, content download and content purchase during play of a suitably configured game, and for updating the firmware and OS of the Playstation 3 device itself. It will be appreciated that the term "on-line" does not imply the physical presence of wires, as the term can also apply to wireless connections of various types.

In an embodiment of the present invention, the above-mentioned online capability comprises interaction with the above-mentioned virtual world (or environment) populated by avatars of the user of the PS3 10 and of other PS3 users who are currently online.

The software to enable the virtual interactive environment is typically resident on the HDD 400, and can be upgraded and/or expanded by software that is downloaded, or stored on optical disk 440, or accessed by any other suitable means. Alternatively, the software may reside on a flash memory card 420, optical disk 440 or a central server (not shown).

In an embodiment of the present invention, the virtual interactive environment (hereafter called the 'home' environment) is selected from the cross-media bar. The Home environment then starts in a conventional manner similar to a 3D video game by loading and executing control software, loading 3D models and textures into video memory 250, and rendering scenes depicting the Home environment. Alternatively or in addition, the Home environment can be initiated by other programs, such as a separate game.

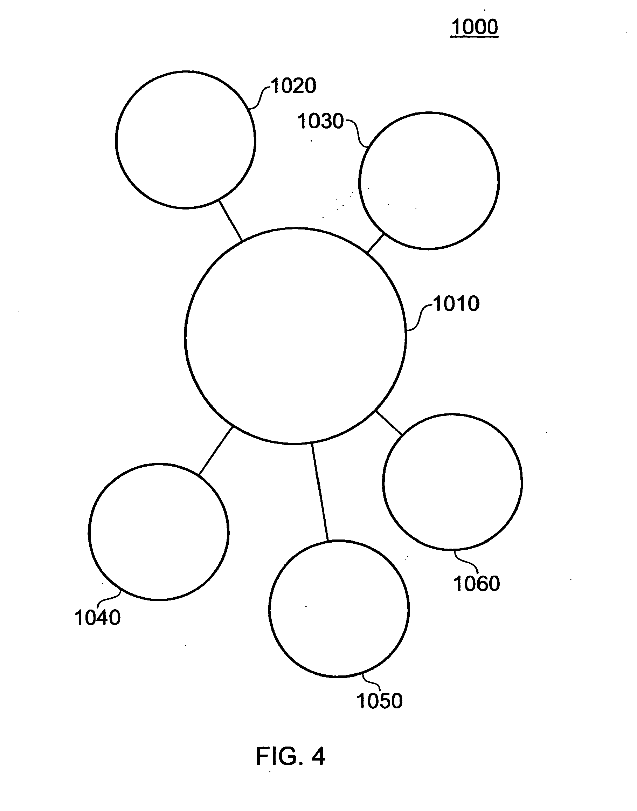

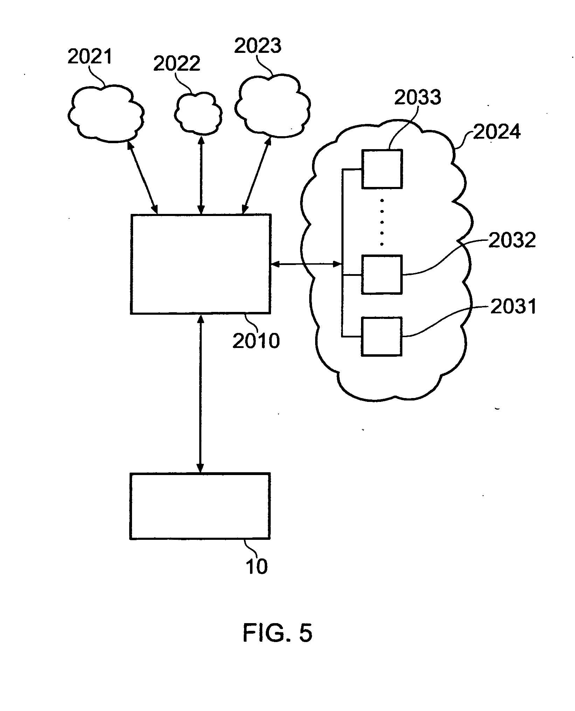

Referring now to Figure 4, which displays a notional map of the Home environment, and Figure 5, which is a schematic diagram of a Home environment online client/server arrangement, the user's avatar is spawned within a lobby zone 1010 by default. However, a user can select among other zones 1010-1060 (detailed below) of the map, causing the select zone to be loaded and the avatar to be spawned within that zone. In an embodiment of the present invention, the map screen further comprises a sidebar on which the available zones may be listed, together with management tools such as a ranking option, enabling zones to be listed in order of user preference, or such as most recently added and/or A-Z listings. In addition a search interface may allow the user to search for a zone by name. In an embodiment of the present invention, there maybe many more zones available than are locally stored on the user's PS3 at any one time; the local availability may be colour coded on the list, or the list may be filtered to only display locally available zones. If the user selects a locally unavailable zone, it can be downloaded from a Home environment Server 2010.

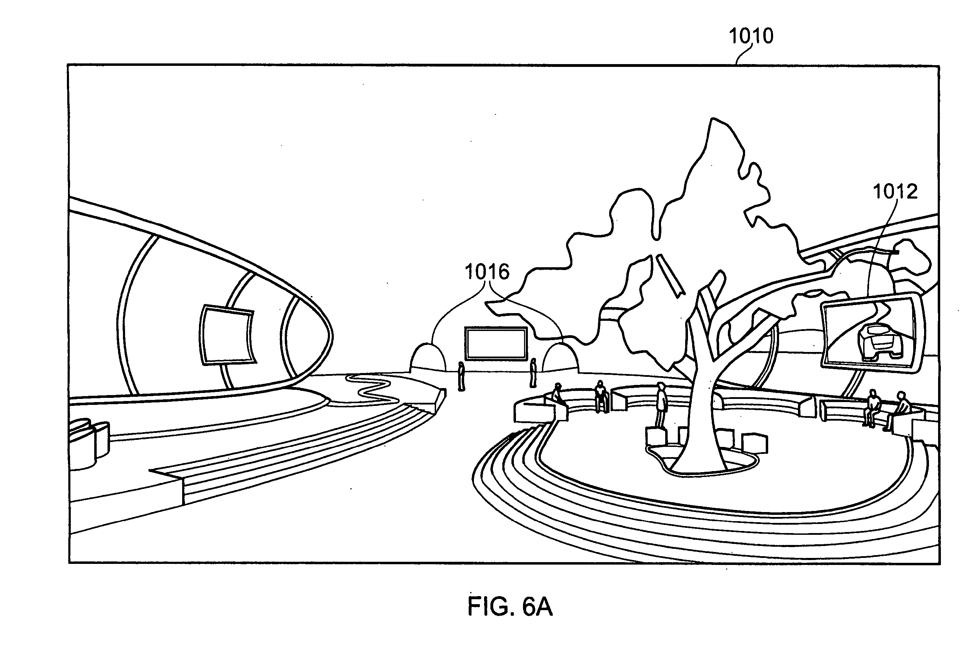

Referring now to Figure 6a, the lobby zone 1010 typically resembles a covered piazza, and may comprise parkland (grass, trees, sculptures etc.), and gathering spaces (such as open areas, single benches or rows of seats etc.) where users can meet through their avatars.

The lobby zone 1010 typically also comprises advertisement hoardings, for displaying either still or moving adverts for games or other content or products. These may be on the walls of the lobby, or may stand alone.

The lobby zone 1010 may also include an open-air cinema 1012 showing trailers, high-profile adverts or other content from third-party providers, Such content is typically streamed or downloaded from a Home environment server 2010 to which the PS3 10 connects when the Home environment is loaded, as described in more detail later.

The cinema screen is accompanied by seating for avatars in front of it, such that when an avatar sits down, the camera angle perceived by the user of the avatar also encompasses the screen.

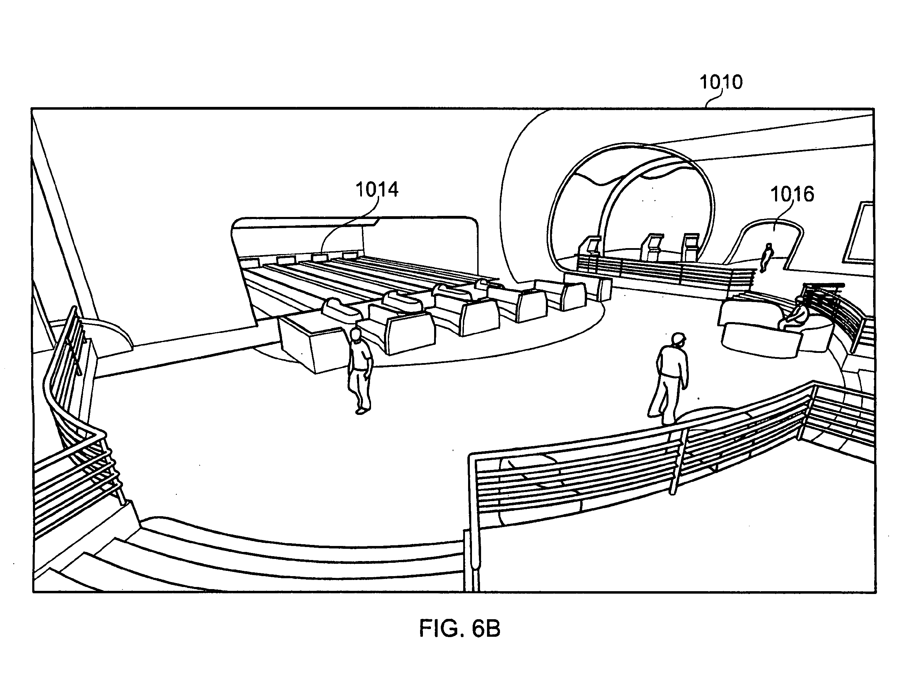

Referring now also to Figure 6b, the lobby zone 1010 may also include general amusements 1014, such as functioning pool tables, bowling alleys, and/or a video arcade. Games of pool or bowling may be conducted via the avatar, such that the avatar holds the pool cue or bowling ball, and is controlled in a conventional manner for such games. In the video arcade, if an avatar approaches a video game machine, the home environment may switch to a substantially full-screen representation of the videogame selected. Such games may, for example, be classic arcade or console games such as Space Invaders (RTM), or Pac-Man (RTM), which are comparatively small in terms of memory and processing and can be emulated by the PS3 within the Home environment or run as plug-ins to the Home environment. In this case, typically the user will control the game directly, without representation by the avatar. The game will switch back to the default Home environment view if the user quits the game, or causes the avatar to move away from the videogame machine. In addition to classic arcade games, user-created game content may be featured on one or more of the virtual video game machines. Such content may be the subject of on-line competitions to be featured in such a manner, with new winning content downloaded on a regular basis.

In addition to the lobby zone 1010, other zones (e.g. zones 1020, 1030, 1040, 1050 and 1060, which may be rooms, areas or other constructs) are available. These may be accessed either via a map screen similar in nature to that of Figure 4, or alternatively the user can walk to these other areas by guiding their avatar to various exits 1016 from the lobby.

Typically, an exit 1416 takes the form of a tunnel or corridor (but may equally take the form of an anteroom) to the next area. While the avatar is within the tunnel or anteroom, the next zone is loaded into memory. Both the lobby and the next zone contain identical models of the tunnel or anteroom, or the model is a common resource to both. In either case, the user's avatar is relocated from the lobby-based version to the new zone-based version of the tunnel or anteroom at the same position. In this way the user's avatar can apparently walk seamlessly throughout the Home environment, without the need to retain the whole environment in memory at the same time.

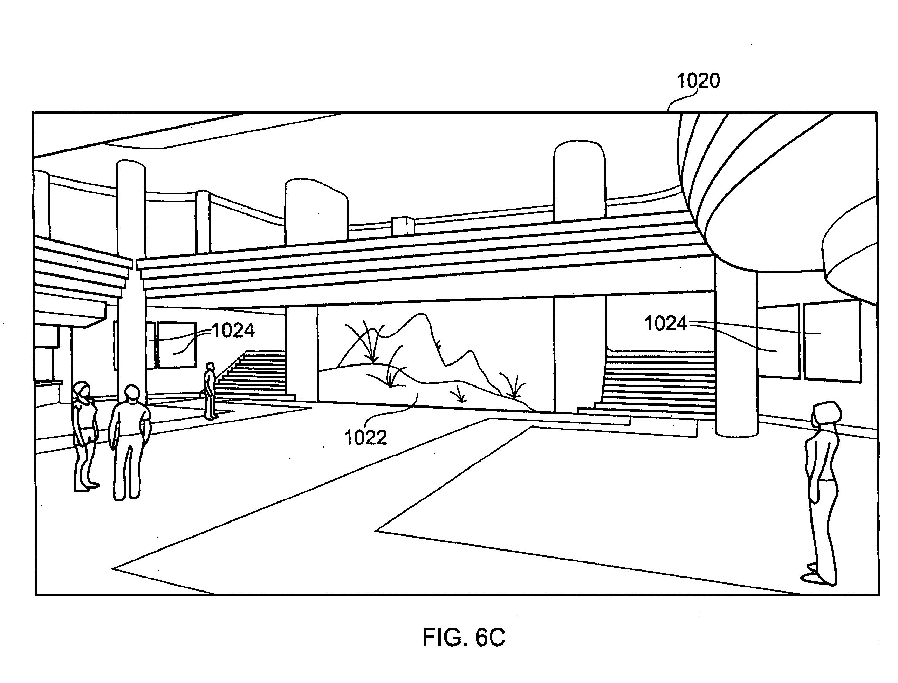

Referring now also to Figure 6c, one available zone is a Cinema zone 1020. The Cinema zone 1020 resembles a multiplex cinema, comprising a plurality of screens that may show content such as trailers, movies, TV programmes, or adverts downloaded or streamed from a Home environment server 2010 as noted previously and detailed below, or may show content stored on the HDD 400 or on an optical disk 440, such as a Blu-Ray disk.

Typically, the multiplex cinema will have an entrance area featuring a screen 1022 on which high-profile trailers and adverts may be shown to all visitors, together with poster adverts 1024, typically but not limited to featuring upcoming movies. Specific screens and the selection and display of the trailers and posters can each be restricted according to the age of the user, as registered with the PS3. This age restriction can be applied to any displayed content to which an age restriction tag is associated, in any of the zones within the Home environment.

In addition, in an embodiment of the present invention the multiplex cinema provides a number of screen rooms in which featured content is available, and amongst which the user can select. Within a screen room downloaded, streamed or locally stored media can be played within a virtual cinema environment, in which the screen is set in a room with rows of seats, screen curtains, etc. The cinema is potentially available to all users in the Home environment, and so the avatars of other users may also be visible, for example watching commonly streamed material such as a web broadcast. Alternatively, the user can zoom in so that the screen occupies the full viewing area.

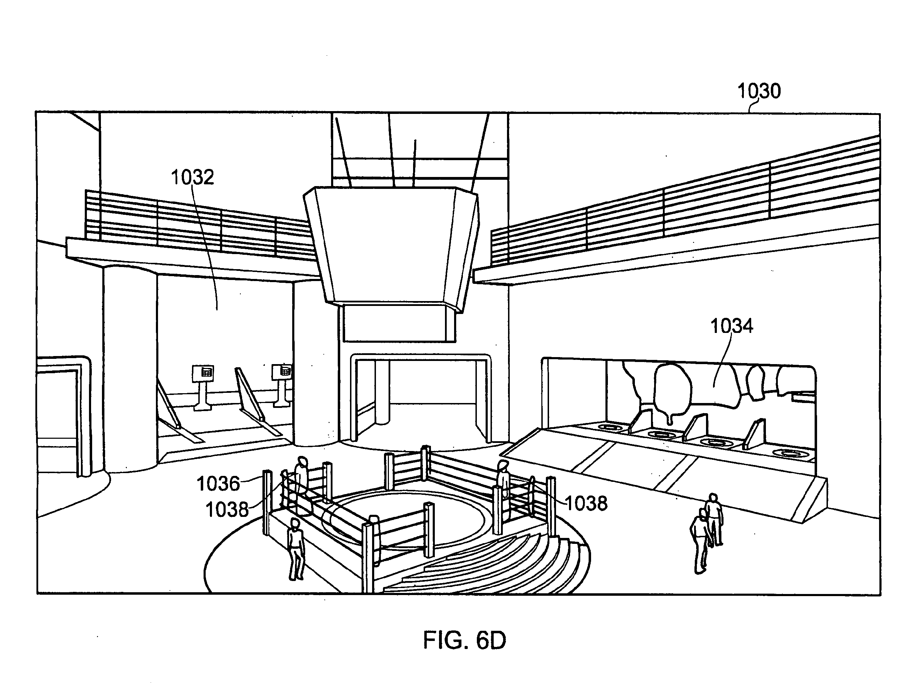

Referring now also to Figure 6d, another type of zone is a developer or publisher zone 1030. Typically, there may be a plurality of such zones available. Optionally, each may have its own exit from the lobby area 1010, or alternatively some or all may share an exit from the lobby and then have separate exits from within a tunnel or ante-room model common to or replicated by each available zone therein. Alternatively they may be selected from a menu, either in the form of a pop-up menu, or from within the Home environment, such as by selecting from a set of signposts. In these latter cases the connecting tunnel or anteroom will appear to link only to the selected developer or publisher zone 1030. Alternatively or in addition, such zones may be selected via the map screen, resulting in the zone being loaded in to memory, and the avatar respawning within the selected zone.

Developer or publisher zones 1030 provide additional virtual environments, which may reflect the look and feel of the developer or publisher's products, brands and marks.

The developer or publisher zones 1030 are supplementary software modules to the Home environment and typically comprise additional 3D models and textures to provide the structure and appearance of the zone.

In addition, the software operable to implement the Home environment supports the integration of third party software via an application program interface (API). Therefore, developers can integrate their own functional content within the Home environment of their own zone. This may take the form of any or all of:
i. Downloading / streaming of specific content, such as game trailers or celebrity endorsements;
ii. Changes in avatar appearance, behaviour and/or communication options within the zone;
iii. The provision of one or more games, such as basketball 1032 or a golf range 1034, optionally branded or graphically reminiscent of the developer's or publisher's games;
iv. One or more interactive scenes or vignettes representative of the developer's or publisher's games, enabling the player to experience an aspect of the game, hone a specific skill of the game, or familiarise themselves with the controls of a game;
v. An arena, ring, dojo, court or similar area 1036 in which remotely played games may be represented live by avatars 1038, for spectators to watch.

Thus, for example, a developer's zone resembles a concourse in the developer's signature colours and featuring their logos, onto which open gaming areas, such as soccer nets, or a skeet range for shooting. In addition, a booth (not shown) manned by game-specific characters allows the user's avatar to enter and either temporarily change into the lead character of the game, or zoom into a first person perspective, and enter a further room resembling a scene from the featured game. Here the user interacts with other characters from the game, and plays out a key scene. Returning to the concourse, adverts for the game and other content are displayed on the walls. At the end of the zone, the concourse opens up into an arena where a 5-a-side football match is being played, where the positions of the players and the ball correspond to a game currently being played by a popular group, such as a high-ranking game clan, in another country.

In embodiments of the present invention, developer / publisher zones are available to download. Alternatively or in addition, to reduce bandwidth they may be supplied as demo content on magazine disks, or may be installed/upgraded from disk as part of the installation process for a purchased game of the developer or publisher. In the latter two examples, subsequent purchase or registration of the game may result in further zone content being unlocked or downloaded. In any event, further modifications, and timely advert and trailer media, may be downloaded as required.

A similar zone is the commercial zone 1040. Again, there may be a plurality of such commercial zones accessible in similar manner to the developer and publisher zones. Like developer / publisher zones 1030, Commercial zones 1040 may comprise representative virtual assets of one or more commercial vendors in the form of 3D models, textures etc., enabling a rendering of their real-world shops, brands and identities, and these may be geographically and/or thematically grouped within zones.

Space within commercial zones may be rented as so-called 'virtual real-estate' by third parties. For example, a retailer may pay to have a rendering of their shop included within a commercial zone 1040 as part of a periodic update of the Home environment supplied via the Home environment server 2010, for example on a monthly or annual renewal basis. A retailer may additionally pay for the commerce facilities described above, either on a periodic basis or per item. In this way they can provide users of the Home environment with a commercial presence.

Again, the commercial zone comprises supplementary software that can integrate with the home environment via an API, to provide additional communication options (shop-specific names, goods, transaction options etc), and additional functionality, such as accessing an online database of goods and services for purchase, determining current prices, the availability of goods, and delivery options. Such functions may be accessed either via a menu (either as a pop-up or within the Home environment, for example on a wall) or via communication with automated avatars. Communication between avatars is described in more detail later.

It will be appreciated that developers and publishers can also provide stores within commercial zones, and in addition that connecting tunnels between developer / publisher and commercial zones may be provided. For example, a tunnel may link a developer zone to a store that sells the developer's games. Such a tunnel may be of a 'many to one' variety, such that exits from several zones emerge from the same tunnel in-store. In this case, if re-used, typically the tunnel would be arranged to return the user to the previous zone rather than one of the possible others.

In an embodiment of the present invention, the software implementing the Home environment has access to an online-content purchase system provided by the PS3 OS. Developers, publishers and store owners can use this system via an interface to specify the IP address and query text that facilitates their own on-line transaction. Alternatively, the user can allow their PS3 registration details and credit card details to be used directly, such that by selecting a suitably enabled object, game, advert, trailer or movie anywhere within the Home environment, they can select to purchase that item or service. In particular, the Home environment server 2010 can store and optionally validate the user's credit card and other details so that the details are ready to be used in a transaction without the user having to enter them. In this way the Home environment acts as an intermediary in the transaction. Alternatively such details can be stored at the PS3 and validated either by the PS3 or by the Home environment server.

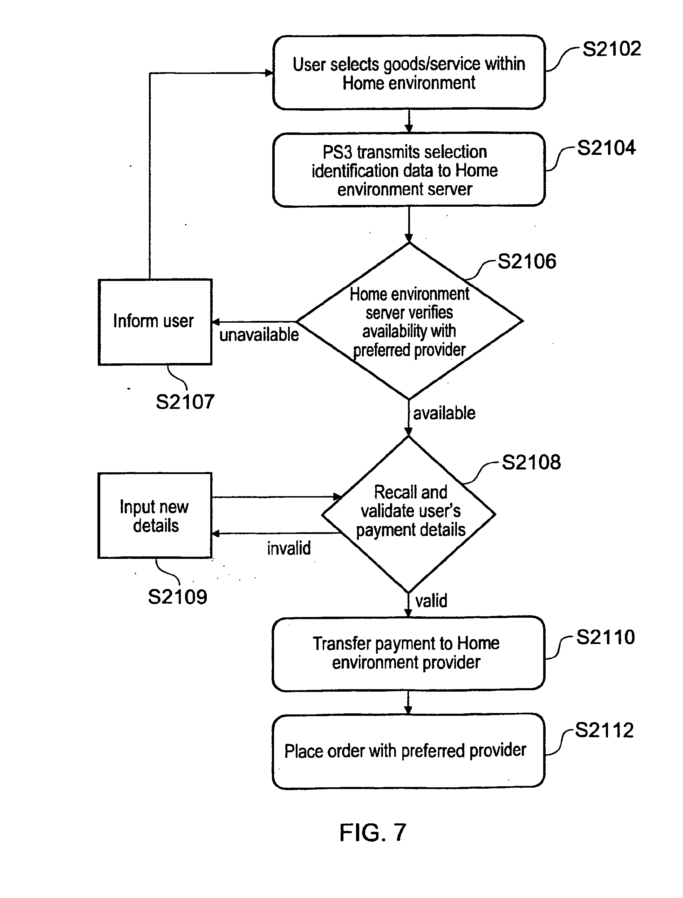

Thus, referring now also to Figure 7, in an embodiment of the present invention a method of sale comprises in a step s2102 a user selecting an item (goods or a service) within the Home environment. In step s2104, the PS3 10 transmits identification data corresponding with the object to the Home environment server 2010, which in step s2016 verifies the item's availability from a preferred provider (preferably within the country corresponding to the IP address of the user). If the item is unavailable then in step s2107 it inform the user by transmitting a message to the user's PS3 10. Alternatively, it first checks for availability from one or more secondary providers, and optionally confirms whether supply from one of these providers is acceptable to the user. In step s2108, the Home environment server retrieves from data storage the user's registered payment details and validates them. If there is no valid payment method available, then the Home environment may request that the user enters new details via a secure (i.e. encrypted) connection. Once a valid payment method is available, then in step s2110 the Home environment server requests from the appropriate third part payment provider a transfer of payment from the user's account. Finally, in s2112 the Home environment server places an order for the item with the preferred provider, giving the user's delivery address or IP address as applicable, and transferring appropriate payment to the preferred provider's account.

In this way, commerce is not limited specifically to shops. Similarly, it is not necessary for shops to provide their own commerce applications if the preferred provider for goods or services when displayed within a shop is set to be that shop's owner. Where the goods or service may be digitally provided, then optionally it is downloaded from the preferred provider directly or via a Home environment server 2010.

In addition to the above public zones, there are additional zones that are private to the individual user and may only be accessed by them or by invitation from them. These zones also have exits from the communal lobby area, but when entered by the avatar (or chosen via the map screen), load a respective version of the zone that is private to that user.

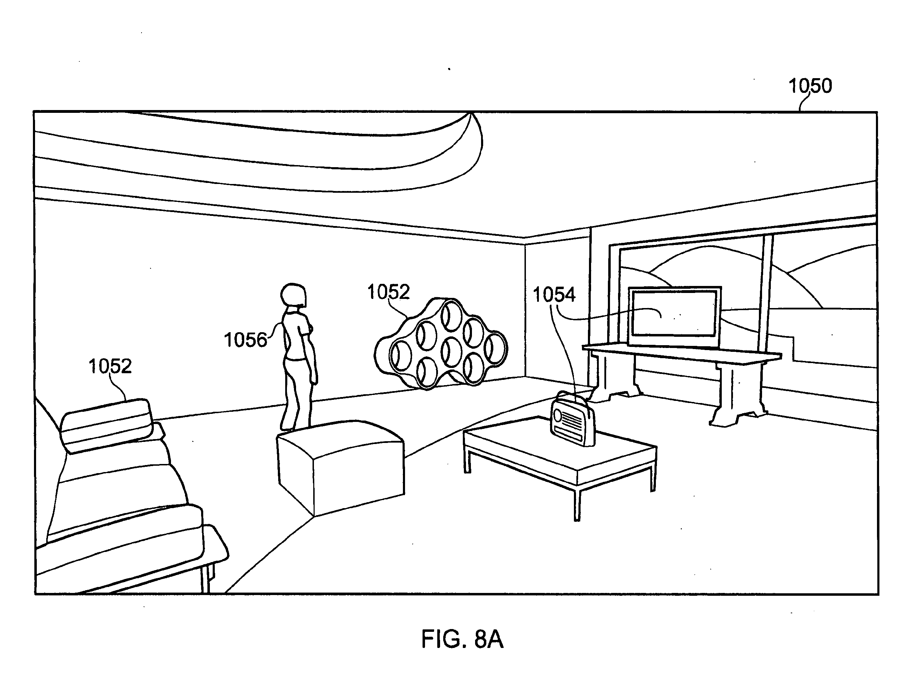

Referring to Figure 8a, the first of these zones is an apartment zone 1050. In an embodiment of the present invention, this is a user-customisable zone in which such features 1052 as wallpaper, flooring, pictures, furniture, outside scenery and lighting may be selected and positioned. Some of the furniture is functional furniture 1054, linked to PS3 functionality. For example, a television may be placed in the apartment 1050 on which can be viewed one of several streamed video broadcasts, or media stored on the PS3 HDD 400 or optical disk 440. Similarly, a radio or hi-fi may be selected that contains pre-selected links to internet radio streams. In addition, user artwork or photos may be imported into the room in the form of wall hangings and pictures.

Optionally, the user (represented in Figure 8a by their avatar 1056) may purchase a larger apartment, and/or additional goods such as a larger TV, a pool table, or automated non-player avatars. Other possible items include a gym, swimming pool, or disco area. In these latter cases, additional control software or configuration libraries to provide additional character functionality will integrate with the home environment via the API in a similar fashion to that described for the commercial and developer /publisher zones 1030, 1040 described previously.

Such purchases may be made using credit card details registered with the Home environment server. In return for a payment, the server downloads an authorisation key to unlock the relevant item for use within the user's apartment. Alternatively, the 3D model, textures and any software associated with an item may also be downloaded from the Home environment server or an authorised third-party server, optionally again associated with an authorisation key. The key may, for example, require correspondence with a firmware digital serial number of the PS3 10, thereby preventing unauthorised distribution.

A user's apartment can only be accessed by others upon invitation from the respective user. This invitation can take the form of a standing invitation for particular friends from within a friends list, or in the form of a single-session pass conferred on another user, and only valid whilst that user remains in the current Home environment session. Such invitations may take the form of an association maintained by a Home environment server 2010, or a digital key supplied between PS3 devices on a peer-to-peer basis that enables confirmation of status as an invitee.

In an embodiment of the present invention invited users can only enter the apartment when the apartment's user is present within the apartment, and are automatically returned to the lobby if the apartment's user leaves. Whilst within the apartment, all communication between the parties present (both user and positional data) is purely peer-to-peer.

The apartment thus also provides a user with the opportunity to share home created content such as artwork, slideshows, audio or video with invited guests, and also to interact with friends without potential interference from other users within the public zones.

When invited guests enter a user's apartment, the configuration of the room and the furnishings within it are transmitted in a peer-to-peer fashion between the attendees using ID codes for each object and positional data. Where a room or item are not held in common between the user and a guest, the model, textures and any code required to implement it on the guest's PS3 may also be transmitted, together with a single-use key or similar constraint, such as use only whilst in the user's apartment and whilst the user and guest remain online in this session.

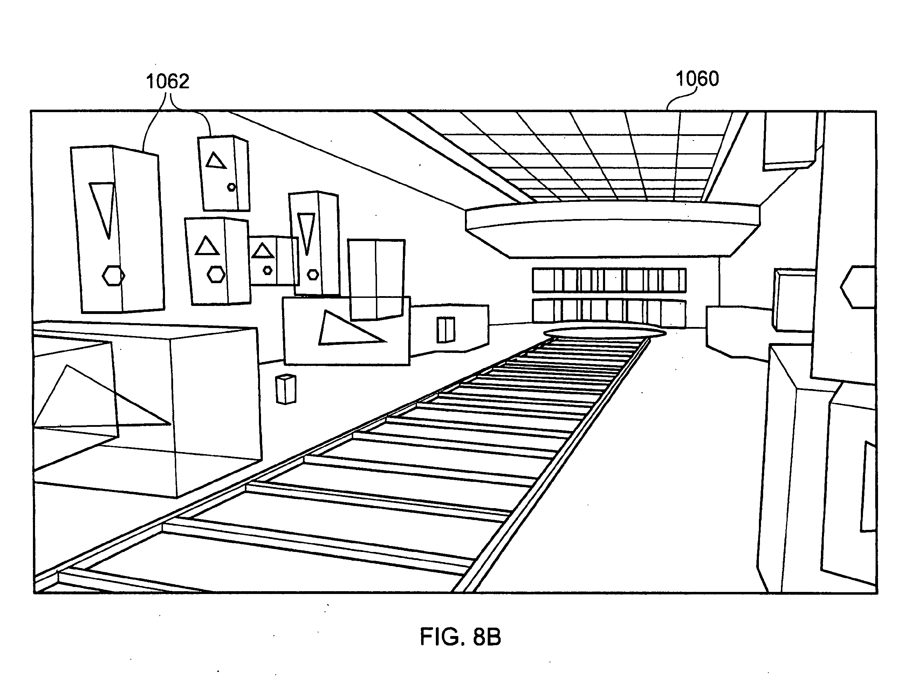

Referring to Figure 8b, a further private space that may similarly be accessed only by invitation is the user's Trophy Room 1060. The Trophy Room 1060 provides a space within which trophies 1062 earned during game play may be displayed.

For example, a third-party game comprises seeking a magical crystal. If the player succeeds in finding the crystal, the third party game nominates this as a trophy for the Trophy Room 1060, and places a 3D model and texture representative of the crystal in a file area accessed by the Home environment software when loading the Trophy Room 1060. The software implementing the Home environment can then render the crystal as a trophy within the Trophy Room.

When parties are invited to view a user's trophy room, the models and textures required to temporarily view the trophies are sent from the user's PS3 to those of the other parties on a peer-to-peer basis. This may be done as a background activity following the initial invitation, in anticipation of entering the trophy room, or may occur when parties enter a connecting tunnel / anteroom or select the user's trophy room from the map screen. Optionally, where another party also has that trophy, they will not download the corresponding trophy from the user they are visiting. Therefore, in an embodiment of the present invention, each trophy comprises an identifying code.

Alternatively or in addition, a trophy room may be shared between members of a group or so-called 'clan', such that a trophy won by any member of the clan is transmitted to other members of the clan on a peer-to-peer basis. Therefore all members of the clan will see a common set of trophies.

Alternatively or in addition, a user can have a standing invitation to all members of the Home environment, allowing anyone to visit their trophy room. As with the commercial and developer/publisher zones, a plurality of rooms is therefore possible, for example a private, a group-based and a public trophy room. This may be managed either by selection from a pop-up menu or signposts within the Home environment as described previously, or by identifying relevant user by walking up to their avatar, and then selecting to enter their (public) trophy room upon using the trophy room exit from the lobby.

Alternatively or in addition, a public trophy room may be provided. This room may display the trophies of the person in the current instance of the Home environment who has the most trophies or a best overall score according to a trophy value scoring scheme. Alternatively it may be an aggregate trophy room, showing the best, or a selection of, trophies from some or all of the users in that instance of the Home environment, together with the ID of the user. Thus, for example, a user could spot a trophy from a game they are having difficulty with, identify who in the Home environment won it, and then go and talk to them about how they won it. Alternatively, a public trophy room could contain the best trophies across a plurality of Home environments, identifying the best games within a geographical, age specific or game specific group, or even world wide. Alternatively, or in addition, a leader board of the best scoring gamers can be provided and updated live.

It will be appreciated that potentially a large number of additional third party zones may become available, each comprising additional 3D models, textures and control software. As a result a significant amount of space on HDD 400 may become occupied by Home environment zones.

Consequently, in an embodiment of the present invention the number of third party zones currently associated with a user's Home environment can be limited. In a first instance, a maximum memory allocation can be used to prevent additional third party zones being added until an existing one is deleted. Alternatively or in addition, third party zones may be limited according to geographical relevance or user interests (declared on registration or subsequently via an interface with the Home environment server 2010), such that only third party zones relevant to the user by these criteria are downloaded. Under such a system, if a new third party zone becomes available, its relevance to the user is evaluated according to the above criteria, and if it is more relevant than at least one of those currently stored, it replaces the currently least relevant third party zone stored on the user's PS3.

Other criteria for relevance may include interests or installed zones of nominated friends, or the relevance of zones to games or other media that have been played on the user's PS3.

Further zones may be admitted according to whether the user explicitly installs them, either by download or by disk.

As noted above, within the Home environment users are represented by avatars. The software implementing the Home environment enables the customisation of a user's avatar film a selection of pre-set options in a similar manner to the customisation of the user's apartment. The user may select gender and skin tone, and customise the facial features and hair by combining available options for each. The user may also select from a wide range of clothing. To support this facility, a wide range of 3D models and textures for avatars are provided. In an embodiment of the present invention, user may import their own textures to display on their clothing. Typically, the parameters defining the appearance of each avatar only occupy around 40 bytes, enabling fast distribution via the home server when joining a populated Home environment.

Each avatar in the home environment can be identified by the user's ID or nickname, displayed in a bubble above the avatar. To limit the proliferation of bubbles, these fade into view when the avatar is close enough that the text it contains could easily be read, or alternatively when the avatar is close enough to interact with and/or is close to the centre of the user's viewpoint.

The avatar is controlled by the user in a conventional third-person gaming manner (e.g. using the game controller 751), allowing them to walk around the Home environment. Some avatar behaviour is contextual; thus for example the option to sit down will only be available when the avatar is close to a seat Other avatar behaviour is available at all times, such as for example the expression of a selected emotion or gesture, or certain communication options. Avatar actions are determined by use of the game controller 751, either directly for actions such as movement, or by the selection of actions via a pop-up menu, summoned by pressing an appropriate key on the game controller 751.

Options available via such a menu include further modification of the avatar's appearance and clothing, and the selection of emotions, gestures and movements. For example, the user can select that their avatar smiles, waves and jumps up and down when the user sees someone they know in the Home environment.

Users can also communicate with each other via their avatars using text or speech.

To communicate by text, in an embodiment of the present invention, messages appear in pop-up bubbles above the relevant avatar, replacing their name bubble if necessary.

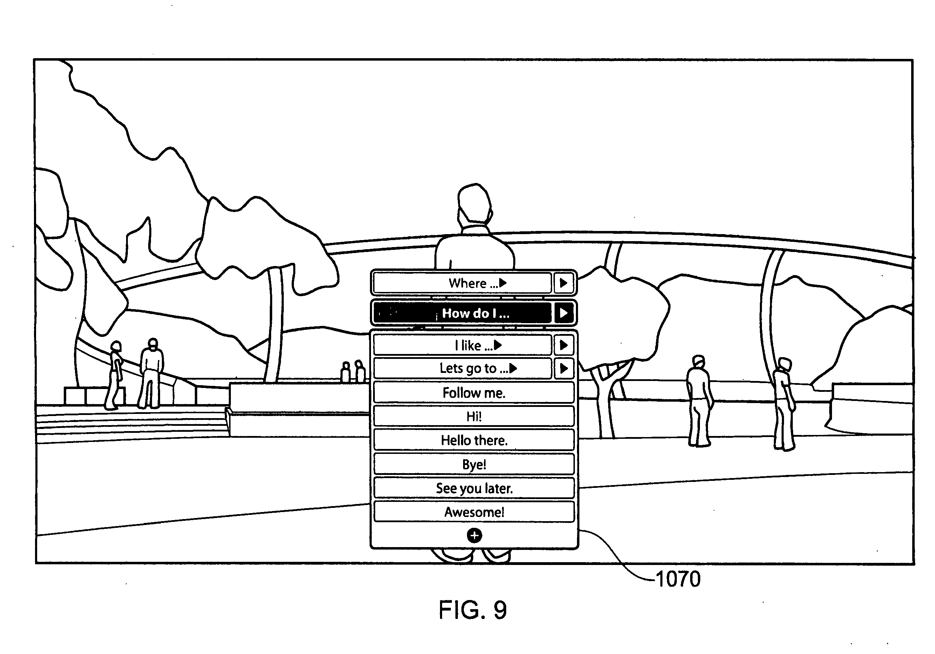

Referring now also to Figure 9, to generate a message the user can activate a pop-up menu 1070 in which a range of preset messages is provided. These may be complete messages, or alternatively or in addition may take the form of nested menus, the navigation of which generates a message by concatenating selected options.

Alternatively or in addition, a virtual keyboard may be displayed, allowing free generation of text by navigation with the game controller 751. If a real keyboard 753 is connected via Bluetooth, then text may by typed into a bubble directly.

In an embodiment of the present invention, the lobby also provides a chat channel hosted by the Home environment server, enabling conventional chat facilities.

To communicate by speech, a user must have a microphone, such as a Bluetooth headset 757, available. Then in an embodiment of the present invention, either by selection of a speech option by pressing a button on the game controller 751, or by use of a voice activity detector within the software implementing the Home environment, the user can speak within the Home environment When speaking, a speech icon may appear above the head of the avatar for example to alert other users to adjust volume settings if necessary.

The speech is sampled by the user's PS3, encoded using a Code Excited Linear Prediction (CELP) codec (or other known VoIP applicable codec), and transmitted in a peer-to-peer fashion to the eight nearest avatars (optionally provided they are within a preset area within the virtual environment surrounding the user's avatars). Where more than eight other avatars are within the preset area, one or more of the PS3s that received the speech may forward it to other PS3s having respective user avatars within the area that did not receive the speech, as described in more detail below. To co-ordinate this function, in an embodiment of the present invention the PS3 will transmit a speech flag to all PS3s whose avatars are within the present area, enabling them to place a speech icon above the relevant (speaking) avatar's head (enabling their user to identify the speaker more easily) and also to notify the PS3s of a transmission. It will be appreciated that the limitation to eight is exemplary, and the actual number depends upon such factors as the speech compression ratio and the available bandwidth.

In an embodiment of the present invention, such speech can also be relayed to other networks, such as a mobile telephony network, upon specification of a mobile phone number. This may be achieved either by routing the speech via the Home environment server to a gateway server of the mobile network, or by Bluetooth transmission to the user's own mobile phone. In this latter case, the mobile phone may require middleware (e.g. a Java ® applet) to interface with the PS3 and route the call.

Thus a user can contact a person on their phone from within the Home environment. In a similar manner, the user can also send a text message to a person on their mobile phone.

In a similar manner to speech, in an embodiment of the present invention users whose PS3s are equipped with a video camera such as the Sony ® Eye Toy ® video camera can use a video chat mode, for example via a pop-up screen, or via a TV or similar device within the Home environment, such as a Sony ® Playstation Portable ® (PSP) held by the avatar. In this case video codecs are used in addition to or instead of the audio codecs.

Optionally, the avatars of users with whom you have spoken recently can be highlighted, and those with whom you have spoken most may be highlighted more prominently, for example by an icon next to their name, or a level of glow around their avatar.

Referring back to Figure 5, when a user selects to activate the Home environment on their PS3 10, the locally stored software generates the graphical representation of the Home environment, and connects to a Home environment server 2010 that assigns the user to one of a plurality of online Home environments 2021, 2022, 2023, 2024. Only four home environments are shown for clarity.

It will be understood that potentially many tens of thousands of users may be online at any one time. Consequently to prevent overcrowding, the Home environment server 2010 will support a large plurality of separate instances of the online Home environment. Likewise, there may be many separate Home environment servers, for example in different countries.

Once assigned to a Home environment, a PS3 initially uploads information regarding the appearance of the avatar, and then in an ongoing fashion provides to the Home environment server with positional data for its own avatar, and receives from the Home environment server the positional data of the other avatars within that online Home environment. In practice this positional update is periodic (for example every 2-seconds) to limit bandwidth, so other PS3s must interpolate movement. Such interpolation of character movement is well-known in on-line games. In addition, each update can provide a series of positions, improving the replication of movement (with some lag), or improving the extrapolation of current movement.

In addition the IP addresses of the other PS3s 2131, 2032, 2033 within that Home environment 2024 is shared so that they can transmit other data such as speech in a peer-to-peer fashion between themselves, thereby reducing the required bandwidth of data handled by the Home environment server.

To prevent overcrowding within the Home environments, each will support a maximum of, for example, 64 users.

The selection of a Home environment to which a user will be connected can take account of a number of factors, either supplied by the PS3 and/or known to the Home environment server via a registration process. These include but are not limited to:
i. The geographical location of the PS3;
ii. The user's preferred language;
iii. The user's age;
iv. Whether any users within the current user's 'friends list' are in a particular Home environment already;
v. What game disk is currently within the user's PS3;
vi. What games have recently been played on the user's PS3.

Thus, for example, a Swiss teenager may be connected to a Home environment on a Swiss server, with a maximum user age of 16 and a predominant language of French. In another example, a user with a copy of 'Revolution' mounted in their PS3 may be connected to a home environment where a predominant number of other users also currently have the same game mounted, thereby facilitating the organisation of multiplayer games. In this latter case, the PS3 10 detects the game loaded within the BD-Rom 430 and informs the Home environment server 2010. The server then chooses a Home environment accordingly.

In a further example, a user is connected to a Home environment in which three users identified on his friends list can be found. In this latter example, the friends list is a list of user names and optionally IP addresses that have been received from other users that the user given wishes to meet regularly. Where different groups of friends are located on different Home environment servers (e.g. where the current user is the only friend common to both sets) then the user may either be connected to the one with the most friends, or given the option to choose.

Conversely, a user may invite one or more friends to switch between Home environments and join them. In this case, the user can view their friends list via a pop-up menu or from within the Home environment (for example via a screen on the wall or an information booth) and determine who is on-line. The user may then broadcast an invite to their friends, either using a peer-to-peer connection or, if the friend is within a Home environment or the IP address is unknown, via the Home environment server. The friend can then accept or decline the invitation to join.

To facilitate invitation, generally a Home environment server will assign less than the maximum supported number of users to a specific home environment, thereby allowing such additional user-initiated assignments to occur. This so-called 'soft-limit' may, for example, be 90% of capacity, and may be adaptive, for example changing in the early evening or at weekends where people are more likely to meet up with friends on-line.

Where several friends are within the same Home environment, in an embodiment of the present invention the map screen may also highlight those zones in which the friends can currently be found, either by displaying their name on the map or in association with the zone name on the side bar.

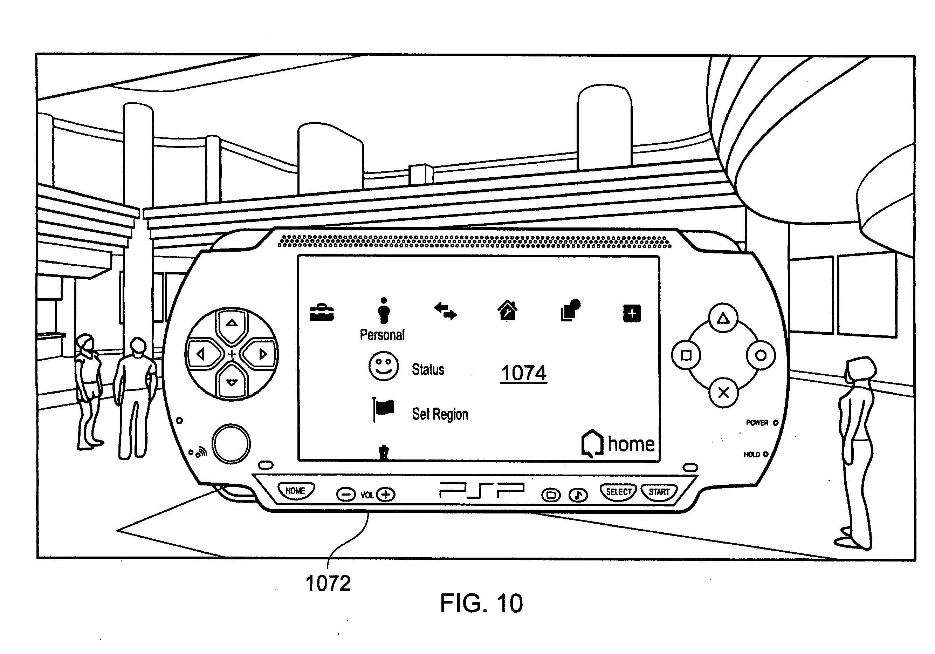

Referring now also to Figure 10, in addition, preferences, settings, functions of the Home environment and optionally other functionality may be viewed, adjusted or accessed as appropriate by use of a virtual Sony ® Playstation Portable ® (PSP) entertainment device 1072 that can be summoned by use of the game controller 751 to pop-up on screen. The user can then access these options, settings and functionality via a PSP cross-media bar 1074 displayed on the virtual PSP. As noted above, the PSP could also be used as an interface for video chat.

When a user wishes to leave the Home environment, in embodiments of the present invention they may do so by selection of an appropriate key on the game controller 751, by selection of an exit option from a pop-up menu, by selection of an exit from within the map screen, by selection of an option via their virtual PSP or by walking through a master exit within the lobby zone.

Typically, exiting the Home environment will cause the PS3 10 to return to the PS3 cross media bar.

Finally, it will be appreciated that additional, separate environments based upon the Home environment software and separately accessible from the PS3 cross-media bar are -envisaged. For example, a supermarket may provide a free disk upon which a Supermarket environment, supported in similar fashion by the Home environment servers, is provided. Upon selection, the user's avatar can browse displayed goods within a virtual rendition of the supermarket (either as 3D models or textures applied to shelves) and click on them to purchase as described above. In this way retailers can provide and update online shopping facilities for their own user base.

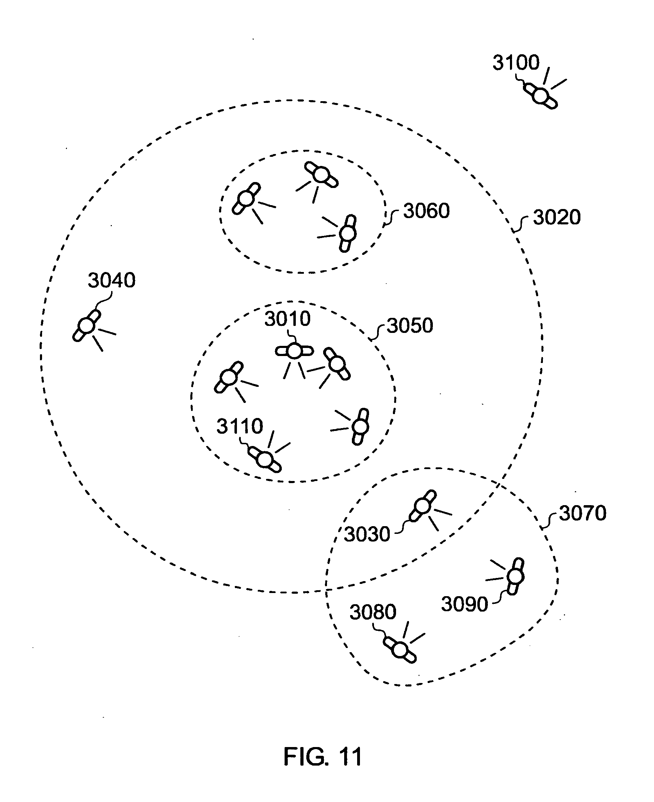

As mentioned above, lobbies and zones may comprise a chat channel which enables users of the Home environment to communicate with each other using speech. This will now be described in more detail with reference to Figures 11 to 16.

Figure 11 shows a plurality of avatars (e.g. a user's avatar 3010 and avatars 3030, 3040, 3080, 3090, 3100, and 3110) within a game zone of the Home environment such as the lobby zone or the apartment zone. As described above, provided that each user associated with an avatar within the game zone has a microphone available, the users of those avatars may communicate with each other using speech. Additionally, each PS3 associated with an avatar knows the position of the other avatars within the home environment due to position information generated by the Home server and transmitted over the network to each PS3.

In Figure 11, avatars may be communicating with each other in peer groups 3050, 3060 and 3070, with a conversation being carried out between members of that peer group. For example, avatars 3010 and 3030 are members of peer groups 3050 and 3070 respectively, whilst the avatar 3040 is not a member of a peer group. Peers groups and speech transmission between the PS3s of users associated with avatars within peer groups will be described in more detail later.

As described above, speech may be transmitted in a peer-to-peer fashion from the PS3 of an avatar who is currently speaking to a predetermined number of avatars that are nearest to the speaking avatar and within a preset interaction area 3020 as defined with respect to the user's avatar 3010. Defining a preset area around the avatar associated with the user who is speaking reduces the noise level within the game zone if there are a large number of avatars present in that game zone. It will be appreciated that the preset interaction area 3020 need not be defined with reference to the avatar but could be designated as a particular region of the game zone, for example if a user wishes to deliver a speech to other avatars within the designated region. If there are fewer avatars within the preset interaction area 3020 than the predetermined number of avatars, the speech data may be transmitted from the PS3 associated with the speaking avatar to all the PS3s associated with the avatars within the preset interaction area 3020.

If more than the predetermined number of avatars are present within the preset area, one or more PS3s that did receive the speech may forward the speech to other PS3s having respective user avatars within the preset area. Typically, the predetermined number of avatars to which speech is initially transmitted is four or eight although it will be appreciated that this number is an example only and that this number could be defined by the user or preset within the software executing the Home environment. In some embodiments, this number may be dynamically altered by the software executing the Home environment in accordance with the bandwidth of the peer-to-peer connections between PS3s or in dependence upon the number of avatars within a game zone.

As described above, each game zone typically comprises a maximum of 64 avatars. When an avatar enters a game zone (e.g. lobby zone, cinema zone, etc.) they are assigned a unique client index in the range 0 to 63. This assignment can either be carried out by the Home server for example. The unique client index is used to determine to which PS3s associated with the respective indexed avatar the voice data should be sent. As a user guides their avatar around a game zone, their PS3 maintains a target list of PS3s to which the voice data should be sent, depending on current positions within the game zone. The target list is stored as a 64bit bit-field with each bit representing a remote client (PS3) to which the voice data should be sent Alternatively, the target list indicates which PS3s should audibly reproduce the audio associated with the voice data although it will be appreciated that other suitable target lists could be compiled.

PS3s associated with avatars that are within the preset interaction area 3020 are added to the target list whilst those PS3s associated with avatars outside the preset interaction area 3020 are not added. For example, as shown in Figure 11, the target list for avatar 3010 would comprise the client indices of all those PS3s associated with avatars within the preset interaction area 3020 associated with the user's avatar 3010 whilst the client indices of the avatars 3080, 3090 and 3100 would not be added.

In one embodiment to transmit the voice data, the PS3 associated with the avatar 3010 selects four client indices from the target list to act as initial targets to which the voice data should be sent (i.e. the predetermined number is 4 in this case). The remaining client indices not included on the initial target list are then divided between the client indices that do appear on the initial target list and appended to the voice data to be sent to the PS3s associated with the respective client indices on the initial target list.

Typically, the PS3 associated with the avatar 3010 selects the four closest avatars (e.g. those within the peer group 3050) to form the initial target list although it will be appreciated that this could be a random selection of avatars within the preset interaction area 3020 or selected in some other way. For example, where the user wishes to have a discussion with other users, the speech captured by the user's microphone is initially transmitted (on a peer-to-peer basis) from their PS3 to the PS3s associated with the avatars within the peer group 3050 as these avatars are closest to the user's avatar 3010 who is speaking.

Therefore, each PS3 on the initial target list receives the voice data together with a list of client indices to which the voice data should be forwarded. Each PS3 that receives the voice data examines the list of client indices that it received along with the voice data to detect to which other PS3s the voice data should be sent If there are targets on the received target list, then each PS3 that received a target list removes itself from the list and selects another four targets from the received list. Alternatively, each PS3 that transmits the speech data removes the client index of the PS3 to which it is transmitting the speech data from the target list before transmitting the speech data to that PS3. Any remaining targets are divided between each set of four targets selected from the received target list and appended to the speech data before transmission. This process repeats for each PS3 that receives the data until all those PS3s within the preset area 3020 have received the data.

In an embodiment of the invention, other PS3s that are not on the target list can also be used to forward the data. These can be selected by each PS3 that is to forward the data in dependence upon the peer-to-peer communication link bandwidth between PS3s or ping time although it will be appreciated that other suitable selection methods could be used. The voice data is then transmitted to those selected PS3s together with the list of client indices indicating to which other PS3s the voice data should be forwarded.

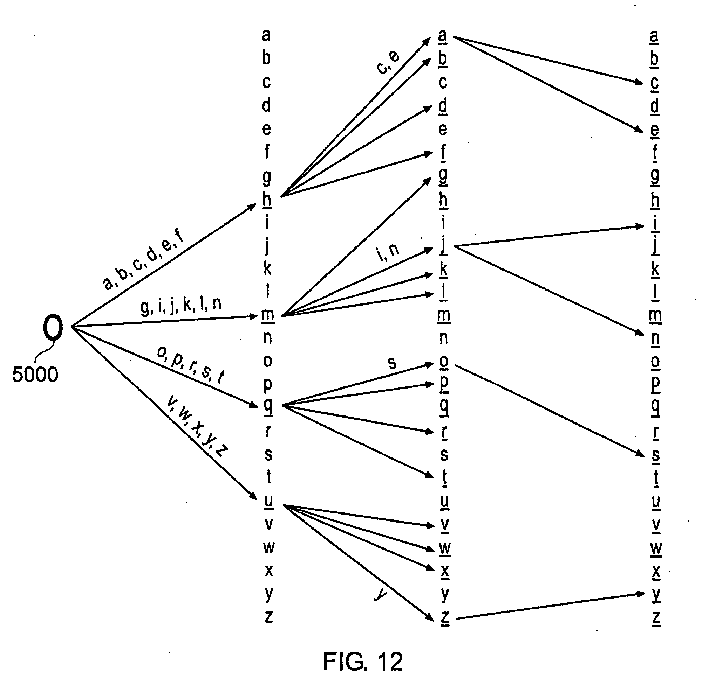

The propagation of voice data according to embodiments of the invention is illustrated with reference to Figure 12. Here a PS3 associated with an avatar having a client index O 5000 is shown transmitting voice data to a plurality of other PS3s having client indices a-z. The target list comprises 26 PS3s having respective client index of a-z. The initial target list is selected to be h, m, q and u (for example). The PS3 associated with client index O 5000 divides the other targets amongst the initial targets and transmits this data along with the voice data to the PS3s associated with the client indices h, m, q, and u, Thus the target list a, b, c, d, e, and f gets transmitted to the PS3 having client index h, the target list g, i, j, k, l, and n gets transmitted to the PS3 having client index m, the target list o, p, r, s, and t gets transmitted to the PS3 having client index q, and the target list v, w, x, y, and z gets transmitted to the PS3 having client index u. The underlining of a client index in Figure 12 indicates that that client has received the voice data.

Each PS3 that receives the speech data (that is the PS3s associated with the clients indices h, m, q, and u) checks the received target list to see which other PS3s the data should be forwarded to and then selects another four from the received list and forwards the speech data to those PS3s together with an appended modified target list. For example, as shown in Figure 12: the PS3 associated with the client index h selects to send the speech data to those PS3s having client indices a (together with the modified target list comprising c and e), b, d, and f; the PS3 associated with client index m selects to send the speech data to those PS3s having client indices g, j (together with the modified target list comprising i and n), k and 1; the PS3 associated with the client index q selects to send the speech data to those PS3s having client indices o (together with the modified target list comprising s), p, r, and t; and the PS3 associated with the client index u selects to send the speech data to those PS3s having client indices v, w, x, and z (together with the modified target list comprising y).

Those PS3s that received the speech data together with a target list (that is the PS3s associated with the client indices a, j, o, and z) then forward the speech data to the PS3s associated with the client indices on the respective received target list so that all the PS3s on the initial target list have received the speech data.

In another embodiment, the speech data may be transmitted between PS3s on a more ad-hoc basis and instead of a target list, the speech data could be transmitted to PS3 s associated with the eight closest avatars. Referring back to Figure 11, those PS3s that have received the speech data poll other PS3s associated with avatars within the preset area 3020 to detect which PS3s have already received the speech data so as to determine to which PS3s the speech data should be transmitted. However, in this case, the PS3s associated with the avatars 3080, 3090 and 3100 are not polled as these avatars are outside the preset area 3020.

For example, the PS3 associated with the avatar 3110 has received the speech data as the avatar 3110 is one of the eight closest avatars to the user's avatar 3010. Therefore, the PS3 associated with the avatar 3110 is operable to poll the PS3s associated with the other avatars within the preset area 3020 so as to detect whether they have received the speech data. In this case, the PS3s associated with the avatars 3030 and 3040 have not received the speech data and respond to the poll request sent by the PS3 associated with the avatar 3110 with a speech transmission flag indicating that they have not received the speech data. Accordingly, the PS3 associated with the avatar 3110 transmits the speech data to the PS3s associated with the avatars 3030 and 3040.

In order to reduce the likelihood that data is sent substantially simultaneously from several PS3s that have received the data to a PS3 that has not received the speech data, not all PS3s that have received the speech data may carry out the polling operation to detect which other PS3s have received the data. For example, only the PS3 associated with the avatar that is furthest away from the speaking avatar may carry out the polling operation although it will be appreciated that other selection criteria could be used.

Optionally, the selection of avatars to include on the target list is dependent upon whether an avatar is facing the avatar who is speaking. Therefore, only the PS3s of those users that are likely to be interested in what is being said by the user associated with the speaking avatar (for example, the user's avatar 3010) receive the voice data. For example, as shown in Figure 11, the avatar 3040 is facing towards the user's avatar 3010 whilst the avatar 3030 is facing away as indicated by the two small lines in front of each avatar. Therefore, the client index of the avatar 3040 is included on the target list of the PS3 associated with the avatar 3110 but not the client index of the PS3 associated with the avatar 3030.

The detection of whether an avatar is facing another avatar is made in dependence upon a direction vector which is normal to a line passing through the centre of the avatar's head and through both ears. In an embodiment of the present invention, the direction vector points in the direction that the avatar is facing although it will be appreciated that any other system suitable to define the direction in which the avatar is facing could be used. A speech transmission angle is then defined with respect to the direction vector so as to define an area in front of the avatar from which the avatar can "listen" to speech. Typically, the speech transmission angle is pre-defined by parameters within the software executing the Home environment although optionally, this angle may be defined by the user. For example, the user may choose to set a relatively narrow angle so that they can listen to speech generated by the user of another avatar without being disturbed by background noise within the game zone or speech generated by other users whose avatars are not within the speech transmission angle.

Optionally, the client index of an avatar is only included on the target list if the avatar is part of the peer group to which the speaking avatar belongs or is not part of another peer group, Therefore, referring back to Figure 11, the user associated with the avatar 3030 is unlikely to be interested in speech transmitted by the PS3 associated with the avatar 3010 as the avatar 3030 is part of a peer group in which avatars are outside the preset area 3020. However, the avatar 3040 is not part of any peer group and therefore the user associated with that avatar is more likely to be interested in the speech transmitted by the PS3 associated with the user's avatar 3010.

As mentioned above, peers groups comprise avatars whose associated users are taking part in a conversation with each other. In an embodiment of the present invention, peer groups are created manually by users when they join a conversation. For example, a user can select whether to join a conversation using the pop-up menu 1070. The PS3 executing the Home environment then detects this input and tags the avatar associated with that user as having entered into a conversation with another avatar so as to create a peer group. The client index of that user's avatar can then be added to the target list of the speaking avatar. Alternatively, the peer groups can be generated automatically by the Home server or by respective PS3s.

Optionally, the PS3 associated with the user who is speaking can calculate the centre of mass of the peer group using known techniques. Therefore, optionally, the preset area 3020 can then be defined with respect to the centre of mass of the peer group and/or the distance between each avatar in the game zone.

It will be appreciated that other methods of detecting and defining a peer group may be used. For example, the PS3 associated with the speaking avatar could detect the peer group in dependence upon speech content defined with respect to the frequency that an avatar participates in a conversation. Alternatively, the peer group could be predefined within the Home environment, for example so as to correspond to respective avatars of a group of friends who have previously agreed to meet up in a certain game zone such as the lobby zone or cinema zone as described above.

As described above, the PS3 associated with a user's avatar maintains a target list of client indices that indicate to which other PS3s the speech data should be sent. Optionally, each client index has associated avatar attribute data that relates to an attribute of the avatar of the PS3 associated with that avatar. For example, the attribute data could comprise data that indicates whether that PS3 is operably connected to a microphone. Therefore, if attribute data associated with a client index of a PS3 indicates that that PS3 is not operably connected to a microphone, then that client index is not added to the target list as the user will not be able to participate in voice chat with other users.

However, it is recognised that a user may wish to hear what other users are saying even if they themselves cannot participate in the conversation. Therefore, alternatively, a user may optionally control, via a suitable user interface (such as the virtual PSP as described above with reference to Figure 10), the settings relating to voice chat associated with their avatar to indicate whether they wish their PS3 to be able to receive voice data from other PS3s. The cell processor 100 of that user's PS3 can then update the attribute data associated with their client index via the Home server or peer-to-peer accordingly. Therefore, even in the case where the user's PS3 is operably connected to a microphone, the user can select whether their avatar is "listening" to a conversation via the virtual PSP as described above.

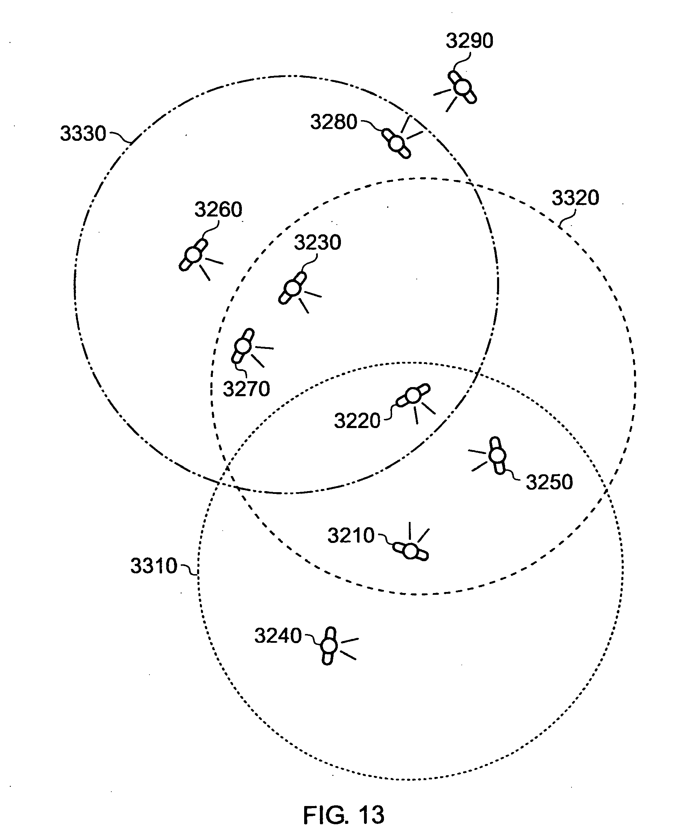

An embodiment of the present invention in which voice data is propagated between PS3s associated with avatars who each have a respective preset interaction area will now be described with reference to Figure 13.

Figure 13 shows a schematic diagram of a plurality of avatars 3210, 3220, 3230, 3240, 3250, 3260, 3270, 3280 and 3290 within a game zone of the Home environment. Each avatar has an associated preset interaction zone as described above. Here, avatar 3210 has an associated preset interaction zone 3310, avatar 3220 has an associated preset interaction zone 3320 and avatar 3230 has an associated preset interaction zone 3330. The other preset interaction zones associated with the other avatars are omitted from Figure 13 for clarity in understanding the diagram.

As mentioned above, speech data may be transmitted from the PS3 associated with an avatar whose user is speaking to PS3s within a preset interaction zone in dependence upon a target list of client indices of other PS3s selected by the user's PS3. For example, the user associated with the avatar 3210 could be speaking and the client index of each PS3 associated with the avatars 3220, 3240, and 3250 within the preset interaction zone 3310 will be added to the target list. However, the PS3s of the avatars 3230, 3260, 3270, 3280 and 3290 will not be added to the target list as they are outside the present interaction zone 3310. However, the user associated with those avatars may still wish to participate in voice chat with the user associated with avatar 3210 even though they are outside the preset interaction area 3310. Therefore, these PS3s can transmit a flag to other PS3 within the game zone indicating that they wish to be included on the target list of the speaking avatar.

Therefore, the PS3 associated with the avatar 3220 is operable to add the client indices of the avatars 3230 and 3270 (within the preset interaction zone 3320) to the target list it receives from the PS3 associated with the avatar 3210. The client index of the avatar 3250 is not added to the target list as it will already be on the target list of the PS3 associated with the avatar 3210 as the avatar 3250 is within the preset interaction zone 3310.

Accordingly, the PS3 associated with the avatar 3230 can then add the client indices of the avatars 3260 and 3280 to the target list received form the PS3 associated with the avatar 3220. Therefore, speech data can be propagated between PS3s of avatars within a Home environment game zone (e.g. cinema zone, lobby zone, apartment zone etc.) without any one PS3 having a substantially higher processing load or data transmission/reception burden being placed upon it due to the ad hoc nature of the peer-to-peer communication protocol.

Alternatively, where preset interaction zones overlap and an avatar is within several preset interaction zones, the PS3 associated with that avatar can receive the speech data from a PS3 that has received the speech data that has the shortest lag time.

Optionally, the volume of the speech that is transmitted between the avatars is adjusted depending upon the number of PS3s that speech data has been transmitted by. For example, the speech transmitted by the PS3 associated with the avatar 3210 could be a normal speech volume whereas the speech transmitted from the PS3 associated with the avatar 3220 to PS3s associated with avatars within the preset interaction zone 3320 could be quieter than the normal volume. Accordingly, the speech transmitted to the initial target PS3s could be at a normal volume while the successive transmissions to next set of targets could be quieter. Optionally, the speech transmitted by the PS3 associated with the avatar 3230 to the PS3s of avatars within the preset interaction zone 3330 could be quieter than that transmitted by the PS3 associated with the avatar 3220. This can be achieved by a stepwise reduction in volume for each successive preset interaction area although it will be appreciated that any other suitable method could be used. Therefore, the likelihood of an unintelligible general cacophony of noise arising within a particular game zone due to too many users speaking at once is reduced. Furthermore, the need for complex distance-volume curves for each avatar within the Home environment is removed as speech is propagated on a grid-like arrangement between PS3s.

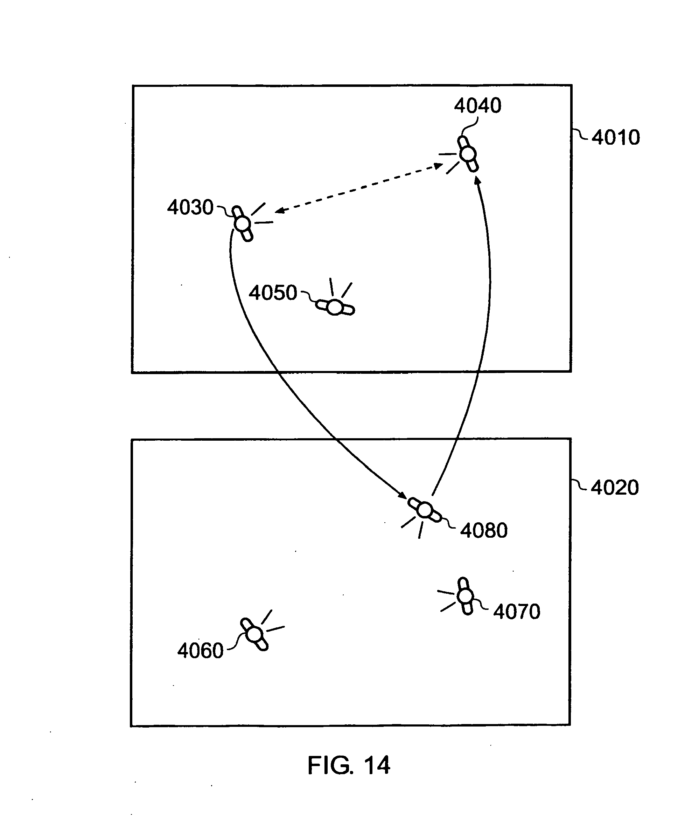

According to an embodiment of the invention, speech data can be transmitted between PS3s associated with avatars within the same game zone via a PS3 or PS3s associated with avatars within another game zone as shown in Figure 14.

Figure 14 shows two different game zones of the Home environment. For example, a game zone 4010 could be the lobby zone 1010 and a game zone 4020 could be the cinema zone 1020. In Figure 14, game zone 4010 is shown as comprising three avatars 4030, 4040 and 4050 and game zone 4020 is shown as comprising three avatars 4060, 4070 and 4080, although it will be appreciated that each game zone could comprise a different number of users as described above.

In Figure 14, a user associated with the avatar 4030 is communicating (as indicated by the dashed line) with a user associated with the avatar 4040 using a chat channel as described above. In this case the PS3 associated with speaking avatar (e.g. the avatar 4030) polls the eight geographically closest PS3s in the Home environment as indicated by data generated by the Home environment server to detect which PS3 has the lowest lag time or highest bandwidth. Alternatively, the eight PS3s having IP addresses most similar to that of the PS3 carrying out the polling operation are polled although it will be appreciated that the number eight is exemplary only and that other suitable polling schemes could be used.

For example, in Figure 14, the peer-to-peer link between the PS3 associated with the avatar 4030 and the PS3 associated with the avatar 4080 has the lowest lag time. Therefore, the data is transmitted from the PS3 associated with the avatar 4030 to the PS3 associated with the avatar 4080. The speech data is then forwarded from the PS3 associated with the avatar 4080 to the PS3 associated with the avatar 4040 as indicated by the solid arrows in Figure 13.

Optionally, a random selection of PS3s associated with avatars within the Home environment are polled to detect which have the lowest lag or the highest bandwidth. The speech data is transmitted to those PS3s whose lag time is below a predetermined threshold or whose bandwidth exceeds a predetermined threshold in a similar manner to that as described above with respect to the preset interaction zones. Therefore, a preset interaction zone can be defined with respect to physical attributes of the peer-to-peer communication link such as bandwidth and lag time rather than virtual distance between the avatars within the Home environment. For example, speech data is transmitted to the eight PS3s whose peer-to-peer connections are detected as having the lowest lag and/or those having the highest bandwidth within the predetermined thresholds. Those PS3s that do not receive the speech data are operable to forward that speech data to other PS3s optionally provided those PS3s also have lag times and/or bandwidths that are in accordance with the predetermined thresholds.

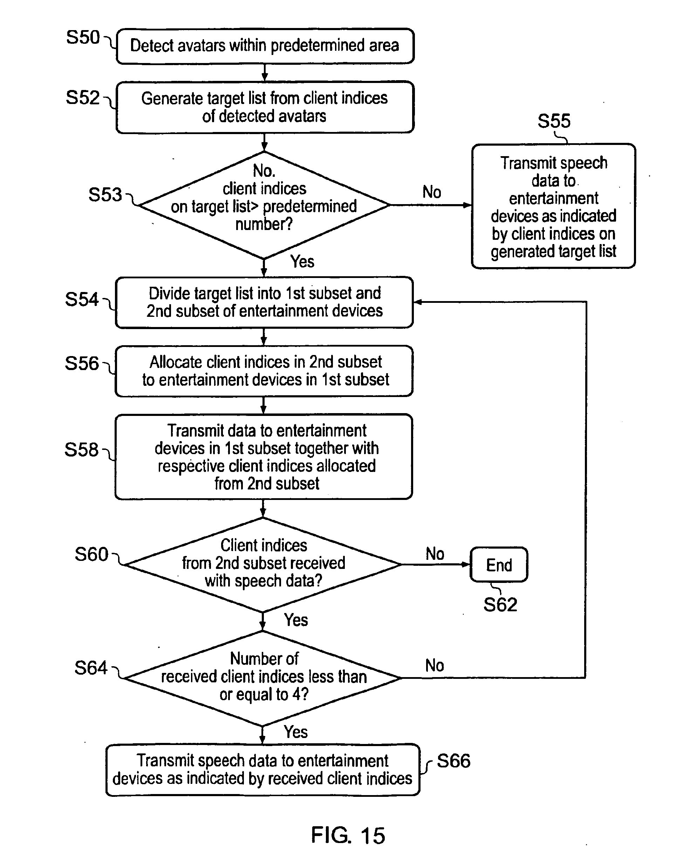

A method of data transfer in accordance with embodiments of the present invention will now be described with reference to Figure 15. Figure 15 illustrates the method described above in which the client indices are transmitted to client entertainment devices together with the speech data.

At a step s50, a first entertainment device associated with a user who is communicating using the voice chat facility detects which avatars are within a predetermined area (e.g. preset interaction area 3020) with respect to the user's avatar 3010 within a game zone of the Home environment independence on data received from the Home server which specifies the positions of the avatars within the Home environment. The first entertainment device is then operable to generate, at a step s52, a target list of client indices to which the speech data should be sent in dependence upon the detection made at the step s50.

Then, at a step s53, the first entertainment device detects whether the number of client indices on the target list generated at the step s52 is greater than a predetermined number which corresponds to the predetermined number of avatars associated with PS3s to which the speech data should initially be sent.

If the number of client indices on the target list is not greater than the predetermined number (i.e. less than or equal to the predetermined number), then, at a step s55, the speech data is transmitted from the first entertainment device to the entertainment devices as indicated by the client indices on the target list generated at the step s52.

Alternatively, if the number of client indices on the target list is greater than the predetermined number, then, at a step s54, the first entertainment device divides the target list into a first subset of entertainment devices and a second subset of entertainment devices. The first subset of entertainment devices comprises those entertainment devices to which the speech data is to be initially sent whilst the second subset comprises all those entertainment devices that are not in the first subset. As described above, the first subset may be selected to be those PS3s associated with the four avatars who are nearest to the user's avatar within the Home environment.

At a step s56, the first entertainment device allocates the client indices from the second subset to the entertainment devices from the first subset to whom the voice data is to be initially sent Typically, the client indices for each entertainment device in the second subset will be allocated and distributed evenly amongst the entertainment devices in the first subset However, it will be appreciated that some entertainment devices in the first subset may not have client indices from the second subset allocated to them if there are only a few client indices associated with the entertainment devices in the second subset.

Then, at a step s58, the speech data is transmitted, together with the client indices allocated to the respective entertainment devices, from the first entertainment device to the respective entertainment devices in the first subset on a peer-to-peer basis.

Those entertainment devices that receive the speech data check, at a step s60, to see if they have also received a list of client indices from the first entertainment device. If they have not received any client indices indicating to which entertainment devices the speech data should be forwarded, then at a step s62, the process ends as that entertainment device has received the speech data and there are no more entertainment devices (as far as that entertainment device is concerned) to which the data needs to be transmitted.

If, however, the entertainment devices that received the speech data also received a list of client indices, the received client indices are used to generate a new target list. Optionally, those entertainment devices that have received a list of client indices from the first entertainment device may augment the received target list to include entertainment devices not included on the target list as generated by the first entertainment device as mentioned above with reference to Figure 13.

Those entertainment devices that have received a target list of client indices check, at a step s64, to see if the number of received client indices is less than or equal to four (although it will be appreciated that this value is an example only and any suitable value could be used). If there are more than four client indices on the received client list then the method proceeds to the step s54 and each entertainment device that received a target list comprising more than four client indices carries out the steps s54, s56, and s58 for their respective target lists.

If, however, the number of client indices on the target list is less than or equal to four, at a step s66, those entertainment devices that received target lists comprising four or less client indices transmit the speech data to the entertainment devices as indicated by the client indices on each respective received target list. Therefore, the completion of the step s55 or steps s62 and s66 indicates that all entertainment devices on the target list generated by the first entertainment device have received the speech data.

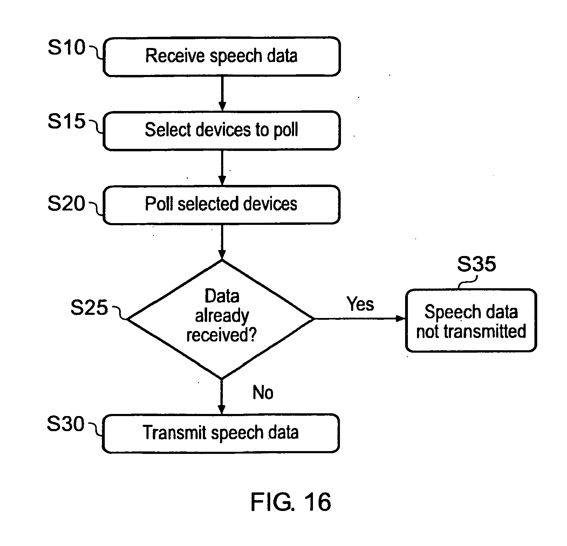

A method of data transfer in accordance with embodiments of the present invention will now be described with reference to Figure 16.

Figure 16 shows a flow diagram of a data transfer method according to embodiments of the present invention. At a step s10 a first PS3 associated with an avatar (e.g. the avatar 3110 of Figure 11) receives speech data from the PS3 of another avatar (e.g. the avatar 3010 of Figure 11) on a peer-to-peer communication basis. Then, at a step s15 the first PS3 selects which other PS3s to poll in order to detect whether they have received the speech data. As described above, this selection can be based on the proximity of the avatars within a game zone of the Home environment or may be based on the lag time or bandwidth of the peer-to-peer links between the PS3s. For example, the first PS3 selects to poll only those PS3s associated with avatars that are within the preset interaction zone 3020 associated with the avatar 3010 (whose PS3 originates the speech data) as shown in Figure 11.

At a step s20, the first PS3 polls the selected PS3s to detect at a step s25 which PS3s have already received the speech data. If some of the polled PS3s are detected as having already received the speech data, then at a step s35 the speech data is not transmitted to those PS3s. However, at a step s30 the speech data is transmitted to those PS3s that are detected as not having already received the speech data so as to propagate the speech data between PS3s in a grid-like fashion.

It will be appreciated that embodiment of the present invention are not limited to transmission of speech data between entertainment devices associated with a virtual environment but may be more generally applicable to transferring multimedia data such as audio data and/or video data between entertainment devices. For example, video footage captured by the video camera 756 (e.g. during video conferencing) could be sent, optionally together with the speech data captured by a microphone, to other PS3s using embodiments of the invention as described above. Such data is real-time (isochronous) in nature, and has to be sent with minimal latency to avoid causing problems for the user.

It will be appreciated that in embodiments of the present invention, elements of the entertainment method may be implemented in the entertainment device in any suitable manner. Thus adapting existing parts of a conventional entertainment device may comprise for example reprogramming of one or more processors therein. As such the required adaptation may be implemented in the form of a computer program product comprising processor-implementable instructions stored on a data carrier such as a floppy disk, optical disk, hard disk, PROM, RAM, flash memory or any combination of these or other storage media, or transmitted via data signals on a network such as an Ethernet, a wireless network, the internet, or any combination of these or other networks, or realised in hardware as an ASIC (application specific integrated circuit) or a FPGA (field programmable gate array) or other configurable circuit suitable to use in adapting the conventional equivalent device.

At least embodiments of the invention also provide a method of transferring real-time multimedia data between a plurality of entertainment devices each having a peer-to-peer communication means for transmitting data to and receiving data from another one of the plurality of entertainment devices via a peer-to-peer communication link, the method comprising the steps of:
receiving, via the peer-to-peer communication means and at a first one of the plurality of entertainment devices, the real-time multimedia data from a second one of the plurality of entertainment devices which originates the data;
selecting, at the first one of the plurality of entertainment devices, which of the plurality of entertainment devices to poll;
polling the selected entertainment devices so as to detect which of the other entertainment devices have received the real-time multimedia data, the polling of the selected entertainment devices being carried out by the first one of the plurality of entertainment devices; and
transmitting from the first one of the plurality of entertainment devices the real-time multimedia data received via the peer-to-peer communication means to those entertainment devices that are detected as not having received the real-time multimedia data.

## Claims

1. A method of transferring real-time multimedia data in a virtual environment between a plurality of entertainment devices each having a peer-to-peer communication device operable to transmit data to and receive data from other entertainment devices, each entertainment device having an associated avatar within the virtual environments, and each entertainment device having a corresponding client index, the method comprising the steps of:
generating (s52), at a first one of the entertainment devices, a target list of client indices associated with entertainment devices to which the real-time multimedia data should be forwarded;
dividing (s54), at the first one of the entertainment devices, the target list into a first subset of entertainment devices and a second subset of entertainment devices;
allocating (s56), at the first one of the entertainment devices, the client index for each entertainment device in the second subset to an entertainment device in the first subset; and
transmitting (s58), from the first one of the plurality of entertainment devices to each entertainment device in the first subset, the real-time multimedia data together with the respective client indices from the second subset allocated to the respective entertainment devices,
in which:
the target list is generated in dependence upon attribute data associated with each entertainment device; and
the attribute data comprises data indicating whether the avatar associated with each entertainment device is within a predetermined area within the virtual environment.

2. A method according to claim 1, in which, for each of the entertainment devices that receives the real-time multimedia data together with the respective client indices from the second subset allocated to that entertainment device, the method comprises:
dividing the received client indices into a third subset of entertainment devices and a fourth subset of entertainment devices;
allocating the client index for each entertainment device in the fourth subset to an entertainment device in the third subset; and
transmitting, to each entertainment device in the third subset, the real-time multimedia data together with the respective client indices from the fourth subset allocated to the respective entertainment devices.

3. A method according to claim 1 or claim 2, in which the predetermined area is defined with respect to the avatar associated with the first one of the entertainment devices.

4. A method according to any of the preceding claims, in which the attribute data comprises data indicating whether a user of that entertainment device wishes their entertainment device to receive the real-time multimedia data.

5. A method according to any of the preceding claims, in which there is a predetermined number of entertainment devices on the target list that can be accommodated in the first subset, and if the number of entertainment devices on the target list is less than the predetermined maximum number, all the entertainment devices in the target list are placed in the first subset.

6. A method according to any of the preceding claims, in which the multimedia data comprises audio data and/or video data.

7. A method according to claim 6, in which the audio data comprises speech data.

8. A method of transferring real-time multimedia data in a virtual environment between a plurality of entertainment devices each having a peer-to-peer communication device operable to transmit data to and receive data from other entertainment devices, each entertainment device having an associated avatar within the virtual environment, and each entertainment device having a corresponding client index, the method comprising the steps of:
receiving, from a first one of the entertainment devices, the real-time multimedia data together with a target list of client indices associated with entertainment devices to which the real-time multimedia data should be forwarded;
dividing, at a second one of the entertainment devices, the target list into a first subset of entertainment devices and a second subset of entertainment devices;
allocating, at the second one of the entertainment devices, the client index for each entertainment device in the second subset to an entertainment device in the first subset; and
transmitting, from the second one of the entertainment devices to each entertainment device in the first subset, the real-time multimedia data together with the respective client indices from the second subset allocated to the respective entertainment devices,
in which:
the target list is generated in dependence upon attribute data associated with each entertainment device; and
the attribute data comprises data indicating whether the avatar associated with each entertainment device is within a predetermined area within the virtual environment.

9. A data carrier comprising computer readable instructions that, when executed by a computer, cause the computer to carry out the method of any one of claims 1 to 8.

10. An entertainment device (10) operable to transmit real-time multimedia data in a virtual environment to a plurality of entertainment devices each having a peer-to-peer communication device operable to for transmit data to and receive data from other entertainment devices, each entertainment device having an associated avatar within the virtual environment, and each entertainment device having a corresponding client index, the entertainment device (10) comprising:
a processor (100) operable to: generate a target list of client indices associated with entertainment devices to which the real-time multimedia data should be transmitted; divide the target list into a first subset of entertainment devices and a second subset of entertainment devices; and allocate the client index for each entertainment device in the second subset to an entertainment device in the first subset; and
a transmitter (700, 720) operable to transmit, to each entertainment device in the first subset, the real-time multimedia data together with the respective client indices from the second subset allocated to the respective entertainment devices,
in which:
the target list is generated in dependence upon attribute data associated with each entertainment device; and
the attribute data comprises data indicating whether the avatar associated with each entertainment device is within a predetermined area within the virtual environment.

11. An entertainment device (10) operable to transmit real-time multimedia data in a virtual environment to a plurality of entertainment devices each having a peer-to-peer communication device operable to transmit data to and receive data from other entertainment devices, each entertainment device having an associated avatar within the virtual environment, and each entertainment device having a corresponding client index, the entertainment device (10) comprising:
a receiver (700, 720) operable to receive, from a first one of the entertainment devices, the real-time multimedia data together with a target list of client indices associated with entertainment devices to which the real-time multimedia data should be transmitted;
a processor (100) operable to: divide the target list into a first subset of entertainment devices and a second subset of entertainment devices; and allocate the client index for each entertainment device in the second subset to an entertainment device in the first subset; and
a transmitter (700, 720) operable to transmit, to each entertainment device in the first subset, the real-time multimedia data together with the respective client indices from the second subset allocated to the respective entertainment devices,
in which:
the target list is generated in dependence upon attribute data associated with each entertainment device; and
the attribute data comprises data indicating whether the avatar associated with each entertainment device is within a predetermined area within the virtual environment.

## Patentansprüche

1. Verfahren zum Übertragen von Echtzeit-Multimediadaten in einer virtuellen Umgebung zwischen mehreren Unterhaltungsgeräten, von denen jedes eine peer-to-peer Kommunikationsvorrichtung aufweist, die dazu betreibbar ist, Daten zu übertragen und von anderen Unterhaltungsgeräten zu empfangen, wobei jedes Unterhaltungsgerät einen zugeordneten Avatar innerhalb der virtuellen Umgebung aufweist und jedes Unterhaltungsgerät einen entsprechenden Client-Index aufweist, wobei das Verfahren die Schritte aufweist
Erzeugen (s52), an einem ersten der Unterhaltungsgeräte, einer Ziel-Liste von Client-Indizes, die Unterhaltungsgeräten zugeordnet sind, an welche die Echtzeit-Multimediadaten weitergeleitet werden sollen;
Teilen (s54), an dem ersten der Unterhaltungsgeräte, der Ziel-Liste in eine erste Teilmenge von Unterhaltungsgeräten und eine zweite Teilmenge von Unterhaltungsgeräten;
Zuteilen (s4), an dem ersten der Unterhaltungsgeräte, des Client-Index für jedes Unterhaltungsgerät in der zweiten Teilmenge an ein Unterhaltungsgerät in der ersten Teilmenge; und
Übertragen (s58), von dem ersten der mehreren Unterhaltungsgeräte, an jedes Unterhaltungsgerät in der ersten Teilmenge der Echtzeit-Multimediadaten zusammen mit den entsprechenden Client-Indizes aus der zweiten Teilmenge, die den entsprechenden Unterhaltungsgeräten zugeteilt ist,
wobei
die Ziel-Liste in Abhängigkeit von Eigenschaft-Daten erzeugt wird, die jedem Unterhaltungsgerät zugeordnet sind; und
die Eigenschaft-Daten Daten aufweisen, die angeben, ob sich der Avatar, der jedem Unterhaltungsgerät zugeordnet ist, in einem vorbestimmten Bereich innerhalb der virtuellen Umgebung befindet.

2. Verfahren gemäß Anspruch 1, in dem für jedes der Unterhaltungsgeräte, das die Echtzeit-Multimediadaten zusammen mit den entsprechenden Client-Indizes aus der zweiten Teilmenge empfängt, die diesem Unterhaltungsgerät zugeordnet ist, das Verfahren aufweist
Teilen der empfangenen Client-Indizes in eine dritte Teilmenge von Unterhaltungsgeräten und eine vierte Teilmenge von Unterhaltungsgeräten;
Zuteilen des Client-Index für jedes Unterhaltungsgerät in der vierten Teilmenge an ein Unterhaltungsgerät in der dritten Teilmenge; und
Übertragen, an jedes Unterhaltungsgerät in der dritten Teilmenge, der Echtzeit-Multimedia-Daten zusammen mit den entsprechenden Client-Indizes aus der vierten Teilmenge, die den entsprechenden Unterhaltungsgeräten zugeteilt ist.

3. Verfahren gemäß Anspruch 1 oder Anspruch 2, in dem der vorbestimmte Bereich bezüglich des Avatars definiert ist, der dem ersten der Unterhaltungsgeräte zugeordnet ist.

4. Verfahren gemäß einem der vorhergehenden Ansprüche, in dem die Eigenschaft-Daten Daten aufweisen, die angeben, ob ein Benutzer dieses Unterhaltungsgerätes wünscht, dass sein Unterhaltungsgerät die Echtzeit-Multimediadaten empfängt.

5. Verfahren gemäß einem der vorhergehenden Ansprüche, in dem eine vorbestimmte Anzahl von Unterhaltungsgeräten auf der Ziel-Liste ist, die in die erste Teilmenge aufgenommen werden können, und falls die Anzahl der Unterhaltungsgeräte auf der Ziel-Liste kleiner ist als die vorbestimmte Maximalzahl, werden alle Unterhaltungsgeräte in der Ziel-Liste in die erste Teilmenge platziert.

6. Verfahren gemäß einem der vorhergehenden Ansprüche, in dem die Multimediadaten Audiodaten und/oder Videodaten aufweisen.

7. Verfahren gemäß Anspruch 6, in dem die Audiodaten Sprachdaten aufweisen.

8. Verfahren zum Übertragen von Echtzeit-Multimediadaten in einer virtuellen Umgebung zwischen mehreren Unterhaltungsgeräten, von denen jedes eine peer-to-peer Kommunikationsvorrichtung aufweist, die dazu betreibbar ist, Daten zu übertragen und von anderen Unterhaltungsgeräten zu empfangen, wobei jedes Unterhaltungsgerät einen zugeordneten Avatar innerhalb der virtuellen Umgebung aufweist und jedes Unterhaltungsgerät einen entsprechenden Client-Index aufweist, wobei das Verfahren die Schritte aufweist
Empfangen, von einem ersten der Unterhaltungsgeräte, der Echtzeit-Multimediadaten zusammen mit einer Ziel-Liste von Client-Indizes, die Unterhaltungsgeräten zugeordnet sind, an welche die Echtzeit-Multimediadaten weitergeleitet werden sollen;
Teilen, an einem zweiten der Unterhaltungsgeräte, der Ziel-Liste in eine erste Teilmenge von Unterhaltungsgeräten und eine zweite Teilmenge von Unterhaltungsgeräten;
Zuteilen, an dem zweiten der Unterhaltungsgeräte, des Client-Index für jedes Unterhaltungsgerät in der zweiten Teilmenge an ein Unterhaltungsgerät in der ersten Teilmenge; und
Übertragen, von dem zweiten der Unterhaltungsgeräte, an jedes Unterhaltungsgerät in der ersten Teilmenge der Echtzeit-Multimediadaten zusammen mit den entsprechenden Client-Indizes aus der zweiten Teilmenge, die den entsprechenden Unterhaltungsgeräten zugeteilt ist,
wobei
die Ziel-Liste in Abhängigkeit von Eigenschaft-Daten erzeugt wird, die jedem Unterhaltungsgerät zugeordnet sind; und
die Eigenschaft-Daten Daten aufweisen, die angeben, ob sich der Avatar, der jedem Unterhaltungsgerät zugeordnet ist, in einem vorbestimmten Bereich innerhalb der virtuellen Umgebung befindet.

9. Datenträger, der computerlesbare Anweisungen aufweist, die, wenn sie durch einen Computer ausgeführt werden, den Computer dazu veranlassen, das Verfahren aus einem der Ansprüche 1 bis 8 auszuführen.

10. Unterhaltungsgerät (10) betreibbar zum Übertragen von Echtzeit-Multimediadaten in einer virtuellen Umgebung an mehrere Unterhaltungsgeräte, von denen jedes eine peer-to-peer Kommunikationsvorrichtung aufweist, die dazu betreibbar ist, Daten zu übertragen und von anderen Unterhaltungsgeräten zu empfangen, wobei jedes Unterhaltungsgerät einen zugeordneten Avatar innerhalb der virtuellen Umgebung aufweist und jedes Unterhaltungsgerät einen entsprechenden Client-Index aufweist, wobei das Unterhaltungsgerät (10) aufweist
einen Prozessor (100), betreibbar zum Erzeugen einer Ziel-Liste von Client-Indizes, die Unterhaltungsgeräten zugeordnet sind, an welche die Echtzeit-Multimediadaten weitergeleitet werden sollen; Teilen der Ziel-Liste in eine erste Teilmenge von Unterhaltungsgeräten und eine zweite Teilmenge von Unterhaltungsgeräten; und Zuteilen des Client-Index für jedes Unterhaltungsgerät in der zweiten Teilmenge an ein Unterhaltungsgerät in der ersten Teilmenge; und
einen Überträger (700, 720) betreibbar zum Übertragen, an jedes Unterhaltungsgerät in der ersten Teilmenge, der Echtzeit-Multimediadaten zusammen mit den entsprechenden Client-Indizes aus der zweiten Teilmenge, die den entsprechenden Unterhaltungsgeräten zugeteilt ist,
wobei
die Ziel-Liste in Abhängigkeit von Eigenschaft-Daten erzeugt wird, die jedem Unterhaltungsgerät zugeordnet sind; und
die Eigenschaft-Daten Daten aufweisen, die angeben, ob sich der Avatar, der jedem Unterhaltungsgerät zugeordnet ist, in einem vorbestimmten Bereich innerhalb der virtuellen Umgebung befindet.

11. Unterhaltungsgerät (10) betreibbar zum Übertragen von Echtzeit-Multimediadaten in einer virtuellen Umgebung an mehrere Unterhaltungsgeräte, von denen jedes eine peer-to-peer Kommunikationsvorrichtung aufweist, die dazu betreibbar ist, Daten zu übertragen und von anderen Unterhaltungsgeräten zu empfangen, wobei jedes Unterhaltungsgerät einen zugeordneten Avatar innerhalb der virtuellen Umgebung aufweist und jedes Unterhaltungsgerät einen entsprechenden Client-Index aufweist, wobei das Unterhaltungsgerät (10) aufweist
einen Empfänger (700, 720) betreibbar zum Empfangen, von einem ersten der Unterhaltungsgeräte, der Echtzeit-Multimediadaten zusammen mit einer Ziel-Liste von Client-Indizes, die Unterhaltungsgeräten zugeordnet sind, an welche die Echtzeit-Multimediadaten übertragen werden sollen;
einen Prozessor (100), betreibbar zum Teilen der Ziel-Liste in eine erste Teilmenge von Unterhaltungsgeräten und einen zweite Teilmenge von Unterhaltungsgeräten; und Zuteilen des Client-Index für jedes Unterhaltungsgerät in der zweiten Teilmenge an ein Unterhaltungsgerät in der ersten Teilmenge;
wobei
die Ziel-Liste in Abhängigkeit von Eigenschaft-Daten erzeugt wird, die jedem Unterhaltungsgerät zugeordnet sind; und
die Eigenschaft-Daten Daten aufweisen, die angeben, ob sich der Avatar, der jedem Unterhaltungsgerät zugeordnet ist, in einem vorbestimmten Bereich innerhalb der virtuellen Umgebung befindet.

## Revendications

1. Procédé de transfert de données multimédia en temps réel dans un environnement virtuel entre une pluralité de dispositifs de divertissement, comportant chacun un dispositif de communication poste-à-poste servant à transmettre des données à d'autres dispositifs de divertissement et à en recevoir en provenance de ces derniers, chaque dispositif de divertissement ayant un avatar associé dans l'environnement virtuel, et chaque dispositif de divertissement ayant un indice client correspondant, le procédé comprenant les étapes consistant à :
générer (s52), dans un premier des dispositifs de divertissement, une liste cible d'indices clients associés aux dispositifs de divertissement auxquels doivent être envoyées les données multimédia en temps réel ;
diviser (s54), dans le premier des dispositifs de divertissement, la liste cible en un premier sous-ensemble de dispositifs de divertissement et en un deuxième sous-ensemble de dispositifs de divertissement ;
attribuer (s56), dans le premier des dispositifs de divertissement, l'indice client de chaque dispositif de divertissement du deuxième sous-ensemble à un dispositif de divertissement du premier sous-ensemble ; et
transmettre (s58), depuis le premier dispositif de la pluralité de dispositifs de divertissement à chaque dispositif de divertissement du premier sous-ensemble, les données multimédia en temps réel avec les indices clients respectifs provenant du deuxième sous-ensemble attribués aux dispositifs de divertissement respectifs,
dans lequel :
la liste cible est générée en fonction de données d'attribut associées à chaque dispositif de divertissement ; et
les données d'attribut comprennent des données indiquant si l'avatar associé à chaque dispositif de divertissement se trouve dans une zone prédéterminée dans l'environnement virtuel.

2. Procédé selon la revendication 1, dans lequel, pour chacun des dispositifs de divertissement qui reçoit les données multimédia en temps réel avec les indices clients respectifs provenant du deuxième sous-ensemble attribués à ce dispositif de divertissement, le procédé comprend :
la division des indices clients reçus en un troisième sous-ensemble de dispositifs de divertissement et en un quatrième sous-ensemble de dispositifs de divertissement ;
l'attribution de l'indice client de chaque dispositif de divertissement du quatrième sous-ensemble à un dispositif de divertissement du troisième sous-ensemble ; et
la transmission, à chaque dispositif de divertissement du troisième sous-ensemble, des données multimédia en temps réel avec les indices clients respectifs provenant du quatrième sous-ensemble attribués aux dispositifs de divertissement respectifs.

3. Procédé selon la revendication 1 ou la revendication 2, dans lequel la zone prédéterminée est définie par rapport à l'avatar associé au premier des dispositifs de divertissement.

4. Procédé selon l'une quelconque des revendications précédentes, dans lequel les données d'attribut comprennent des données indiquant si un utilisateur de ce dispositif de divertissement souhaite que son dispositif de divertissement reçoive les données multimédia en temps réel.

5. Procédé selon l'une quelconque des revendications précédentes, dans lequel il y a un nombre prédéterminé de dispositifs de divertissement sur la liste cible qui peuvent être contenus dans le premier sous-ensemble, et si le nombre de dispositifs de divertissement sur la liste cible est inférieur au nombre maximum prédéterminé, tous les dispositifs de divertissement de la liste cible sont placés dans le premier sous-ensemble.

6. Procédé selon l'une quelconque des revendications précédentes, dans lequel les données multimédia comprennent des données audio et/ou des données vidéo.

7. Procédé selon la revendication 6, dans lequel les données audio comprennent des données vocales.

8. Procédé de transfert de données multimédia en temps réel dans un environnement virtuel entre une pluralité de dispositifs de divertissement, comportant chacun un dispositif de communication poste-à-poste servant à transmettre des données à d'autres dispositifs de divertissement et à en recevoir en provenance de ces derniers, chaque dispositif de divertissement ayant un avatar associé dans l'environnement virtuel, et chaque dispositif de divertissement ayant un indice client correspondant, le procédé comprenant les étapes consistant à :
recevoir, en provenance du premier des dispositifs de divertissement, les données multimédia en temps réel avec une liste cible d'indices clients associés aux dispositifs de divertissement auxquels doivent être envoyées les données multimédia en temps réel ;
diviser, dans un deuxième des dispositifs de divertissement, la liste cible en un premier sous-ensemble de dispositifs de divertissement et en un deuxième sous-ensemble de dispositifs de divertissement ;
attribuer, dans le deuxième des dispositifs de divertissement, l'indice client de chaque dispositif de divertissement du deuxième sous-ensemble à un dispositif de divertissement du premier sous-ensemble ; et
transmettre, depuis le deuxième des dispositifs de divertissement à chaque dispositif de divertissement du premier sous-ensemble, les données multimédia en temps réel avec les indices clients respectifs provenant du deuxième sous-ensemble attribués aux dispositifs de divertissement respectifs,
dans lequel :
la liste cible est générée en fonction de données d'attribut associées à chaque dispositif de divertissement ; et
les données d'attribut comprennent des données indiquant si l'avatar associé à chaque dispositif de divertissement se trouve dans une zone prédéterminée dans l'environnement virtuel.

9. Support de données comprenant des instructions lisibles par ordinateur qui, lorsqu'elles sont exécutées par un ordinateur, amènent l'ordinateur à réaliser le procédé selon l'une quelconque des revendications 1 à 8.

10. Dispositif de divertissement (10) servant à transmettre des données multimédia en temps réel dans un environnement virtuel à une pluralité de dispositifs de divertissement, comportant chacun un dispositif de communication poste-à-poste servant à transmettre des données à d'autres dispositifs de divertissement et à en recevoir en provenance de ces derniers, chaque dispositif de divertissement ayant un avatar associé dans l'environnement virtuel, et chaque dispositif de divertissement ayant un indice client correspondant, le dispositif de divertissement (10) comprenant :
un processeur (100) servant à : générer une liste cible d'indices clients associés aux dispositifs de divertissement auxquels doivent être envoyées les données multimédia en temps réel ; diviser la liste cible en un premier sous-ensemble de dispositifs de divertissement et en un deuxième sous-ensemble de dispositifs de divertissement ; et attribuer l'indice client de chaque dispositif de divertissement du deuxième sous-ensemble à un dispositif de divertissement du premier sous-ensemble ; et
un émetteur (700, 720) servant à transmettre, à chaque dispositif de divertissement du premier sous-ensemble, les données multimédia en temps réel avec les indices clients respectifs provenant du deuxième sous-ensemble attribués aux dispositifs de divertissement respectifs,
dans lequel :
la liste cible est générée en fonction des données d'attribut associées à chaque dispositif de divertissement ; et
les données d'attribut comprennent des données indiquant si l'avatar associé à chaque dispositif de divertissement se trouve dans une zone prédéterminée dans l'environnement virtuel.

11. Dispositif de divertissement (10) servant à transmettre des données multimédia en temps réel dans un environnement virtuel à une pluralité de dispositifs de divertissement, comportant chacun un dispositif de communication poste-à-poste servant à transmettre des données à d'autres dispositifs de divertissement et à en recevoir en provenance de ces derniers, chaque dispositif de divertissement ayant un avatar associé dans l'environnement virtuel, et chaque dispositif de divertissement ayant un indice client correspondant, le dispositif de divertissement (10) comprenant :
un récepteur (700, 720) servant à recevoir, depuis un premier des dispositifs de divertissement, les données multimédia en temps réel avec une liste cible d'indices clients associés aux dispositifs de divertissement auxquels doivent être envoyées les données multimédia en temps réel ;
un processeur (100) servant à : diviser la liste cible en un premier sous-ensemble de dispositifs de divertissement et en un deuxième sous-ensemble de dispositifs de divertissement ; et attribuer l'indice client de chaque dispositif de divertissement du deuxième sous-ensemble à un dispositif de divertissement du premier sous-ensemble ; et
un émetteur (700, 720) servant à transmettre, à chaque dispositif de divertissement du premier sous-ensemble, les données multimédia en temps réel avec les indices clients respectifs provenant du deuxième sous-ensemble attribués aux dispositifs de divertissement respectifs,
dans lequel :
la liste cible est générée en fonction des données d'attribut associées à chaque dispositif de divertissement ; et
les données d'attribut comprennent des données indiquant si l'avatar associé à chaque dispositif de divertissement se trouve dans une zone prédéterminée dans l'environnement virtuel.
